# EUROPEAN PATENT APPLICATION

(11) **EP 4 220 805 A2**
(43) Date of publication of application: **02.08.2023**
(21) Application number: 23152029.7
(22) Date of filing: 17.01.2023
(51) Int. Cl.: H01M 10/0567, H01M 10/0525, H01M 10/42

(54) **ELECTROLYTIC SOLUTION, ELECTROCHEMICAL DEVICE, AND ELECTRONIC DEVICE**

(30) Priority: 18.01.2022 CN 202210057124
(71) Applicant: Ningde Amperex Technology Limited, Ningde City, 352100 (CN)
(72) Inventor: PENG, Xiexue, Ningde City, Fujian Province, People's Republic of China, 352100 (CN); TANG, Chao, Ningde City, Fujian Province, People's Republic of China, 352100 (CN)
(74) Representative: Icosa

(57) **Abstract**

An electrolytic solution includes a compound represented by Formula I-A and a compound represented by Formula II-A. In Formula I-A, A¹¹, A¹², and A¹³ are each one independently selected from Formula (I-A1) and Formula (I-A2). In Formula I-A, n is a positive integer from 1 to 8. When n>1, the plurality of A¹¹ structures are identical or different. At least two of the A¹¹, A¹², or A¹³ are selected from I-A2. In Formula II-A, Q is independently selected from Formula (II-A1) and Formula (II-A2). In Formula II-A, m is 1 or 2. R¹¹, R¹², R¹³, R²¹, R²², and R²³ are each independently selected from a covalent single bond, a substituted or unsubstituted C₁ to C₁₀ alkylidene and heterocyclyl, a substituted or unsubstituted C₂ to C₁₀ alkenyl and alkynyl, a substituted or unsubstituted C₆ to C₁₀ aryl, a substituted or unsubstituted C₃ to C₁₀ alicyclic hydrocarbyl, and a substituted or unsubstituted heteroatom-containing functional group, in which a substituent for substitution is halogen.

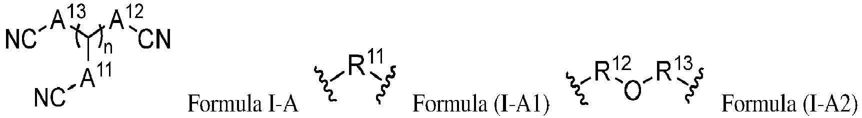

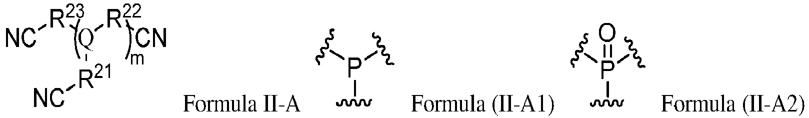

## Description

### TECHNICAL FIELD

This application relates to the electrochemical field, and in particular, to an electrolytic solution, an electrochemical device, and an electronic device.

### BACKGROUND

Lithium-ion batteries are characterized by a high energy density, a low maintenance cost, a relatively low self-discharge rate, a long cycle life, no memory effect, a stable working voltage, environmental friendliness, and the like, and therefore, have attracted extensive attention and are widely used in the fields such as portable electronic devices (including electronic products such as a mobile phone, a notebook computer, and a camera), electric tools, and electric vehicles.

However, with the rapid development of technology and the diversity of market demand, people have imposed higher requirements, such as higher cycle performance and higher storage performance, on the power supply of the electronic products.

### SUMMARY

In view of the problems in the background technologies, an objective of this application is to provide an electrolytic solution, an electrochemical device, and an electronic device to enhance high-temperature storage and cycle performance of lithium-ion batteries.

To achieve the foregoing objective, this application provides an electrolytic solution, including a compound represented by Formula I-A and a compound represented by Formula II-A:

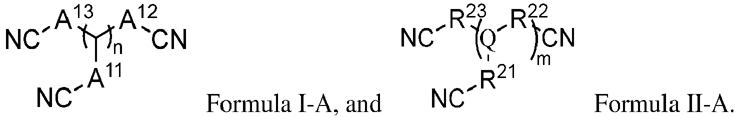

In Formula I-A, A¹¹, A¹², and A¹³ are each one independently selected from Formula (I-A1) and Formula (I-A2):

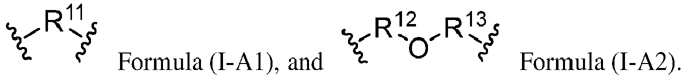

In Formula I-A, n is a positive integer ranging from 1 to 8; when there are a plurality of A¹¹ structures, the plurality of A¹¹ structures are identical or different; and at least two of the A¹¹, A¹², or A¹³ are selected from I-A2.

In Formula II-A, Q is independently selected from Formula (II-A1) and Formula (II-A2):

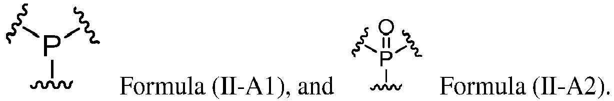

In Formula II-A, m is selected from 1 or 2.

R¹¹, R¹², R¹³, R²¹, R²², and R²³ are each independently selected from a covalent single bond, a substituted or unsubstituted C₁ to C₁₀ alkylidene, a substituted or unsubstituted C₂ to C₁₀ alkenyl, a substituted or unsubstituted C₂ to C₁₀ alkynyl, a substituted or unsubstituted C₆ to C₁₀ aryl, a substituted or unsubstituted C₃ to C₁₀ alicyclic hydrocarbyl, a substituted or unsubstituted C₁ to C₁₀ heterocyclyl, and a substituted or unsubstituted heteroatom-containing functional group, in which a substituent for substitution is halogen.

The heterocyclyl includes an aliphatic heterocyclyl and an aromatic heterocyclyl; and 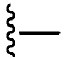 represents a site of bonding with an adjacent atom.

In some embodiments, the compound represented by Formula I-A includes at least one of compounds represented by Formula (I-1) to Formula (1-17): 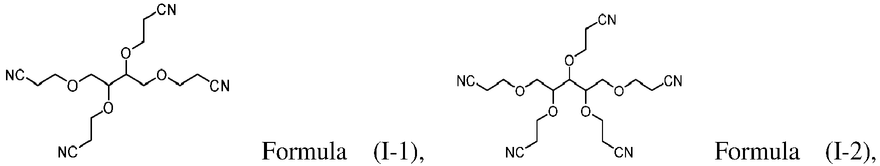 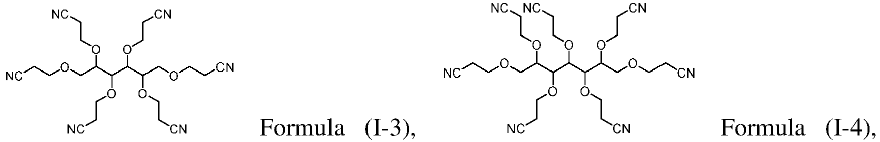 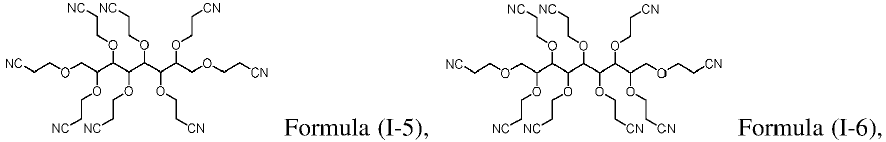 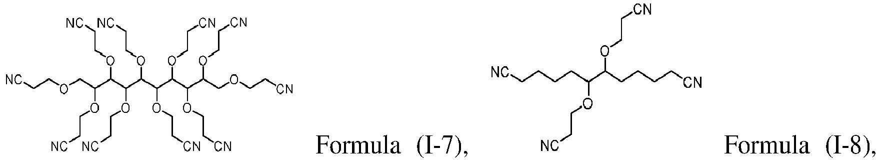 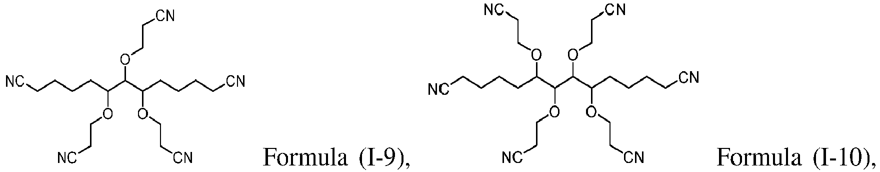 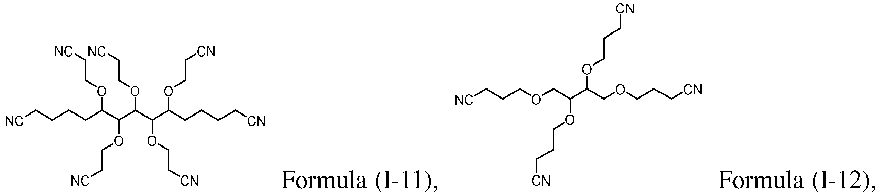 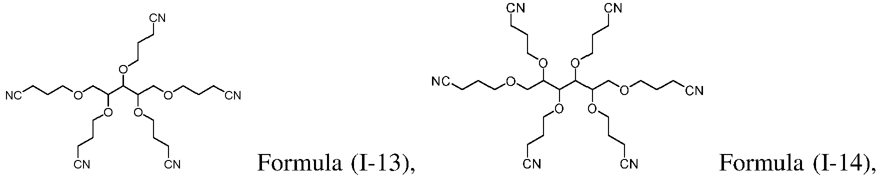 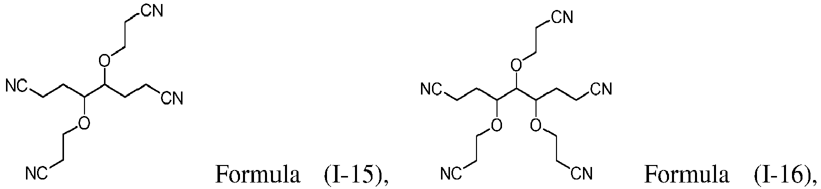 and

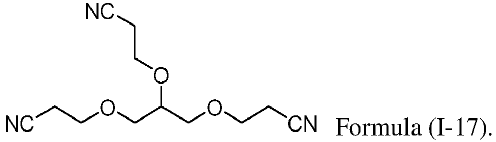

In some embodiments, the compound represented by Formula II-A includes at least one of compounds represented by Formula (II-1) to Formula (11-21): 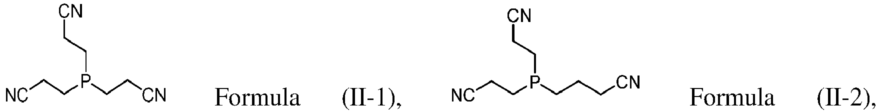 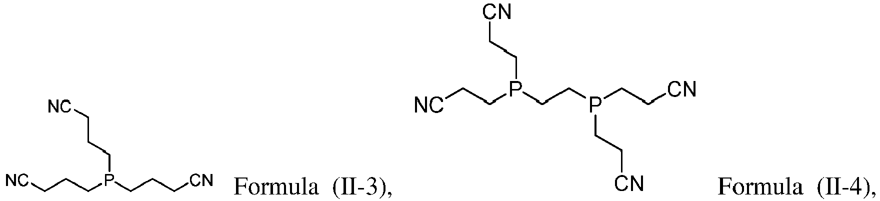 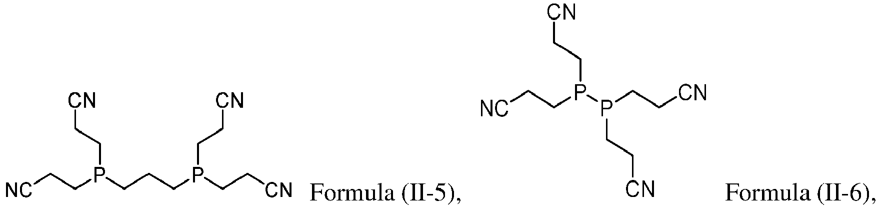 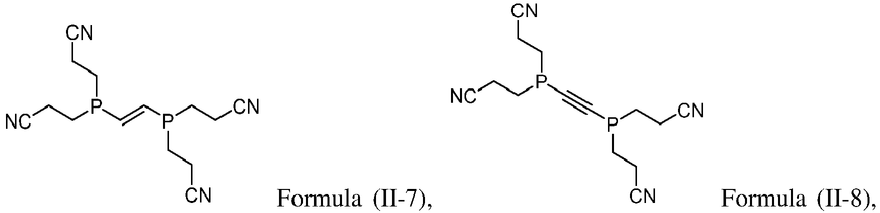 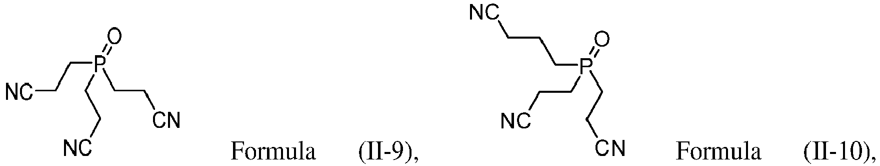 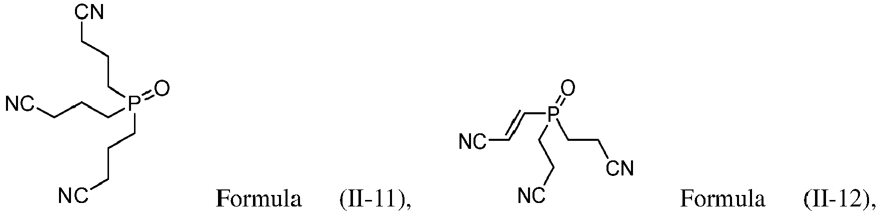 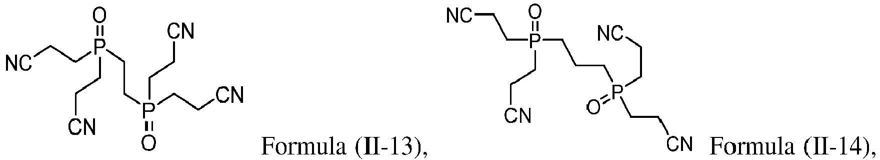 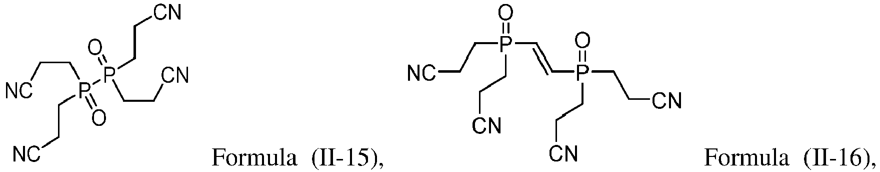 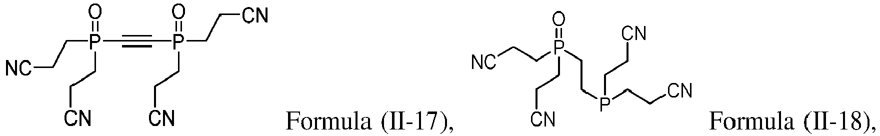 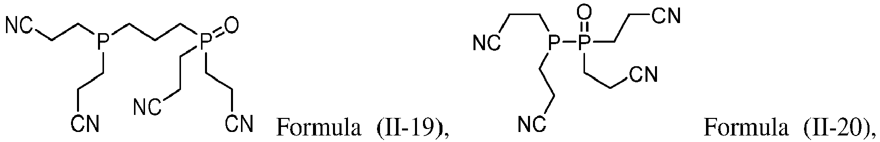 and

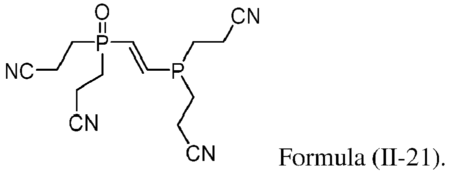

In some embodiments, based on a mass of the electrolytic solution, a mass percent of the compound represented by Formula I-A is x, and x satisfies 0.01% ≤ x ≤ 5%.

In some embodiments, based on the mass of the electrolytic solution, a mass percent of the compound represented by Formula II-A is y, and y satisfies 0.01% ≤ y ≤ 5%.

In some embodiments, based on a mass of the electrolytic solution, an aggregate mass percent of the compound represented by Formula I-A and the compound represented by Formula II-A is 0.1% ≤ x + y ≤ 10%.

In some embodiments, the electrolytic solution further includes a compound represented by Formula III-A.

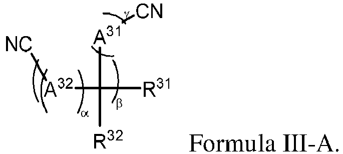

In the formula above, A³¹ and A³² are each one independently selected from halogen, Formula (III-B), and Formula (III-C):

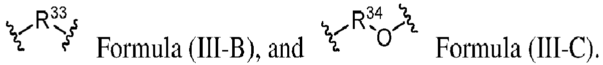

In the formula above, α and γ are each independently selected from 0 or 1, and β is independently selected from 0, 1, or 2.

R³¹ and R³² are each independently selected from hydrogen, halogen, a substituted or unsubstituted C₁ to C₁₀ alkyl, a substituted or unsubstituted C₂ to C₁₀ alkenyl, a substituted or unsubstituted C₂ to C₁₀ alkynyl, a substituted or unsubstituted C₂ to C₁₀ cyclyl, and a substituted or unsubstituted C₂ to C₁₀ heteroatom-containing functional group, in which a substituent for substitution is halogen;

R³³ and R³⁴ are each independently selected from a substituted or unsubstituted C₁ to C₁₀ alkylidene, a substituted or unsubstituted C₂ to C₁₀ alkenyl, a substituted or unsubstituted C₂ to C₁₀ alkynyl, a substituted or unsubstituted C₂ to C₁₀ cyclyl, and a substituted or unsubstituted C₂ to C₁₀ heteroatom-containing functional group, in which a substituent for substitution is halogen. The cyclyl includes an alicyclyl and a heterocyclyl.

Based on a mass of the electrolytic solution, a mass percent of the compound represented by Formula III-A is 0.1% to 10%.

In some embodiments, the compound represented by Formula III-A includes at least one of compounds represented by Formula (IΠ-1) to Formula (III-30):

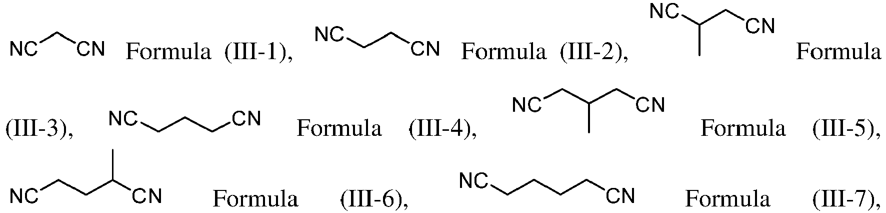

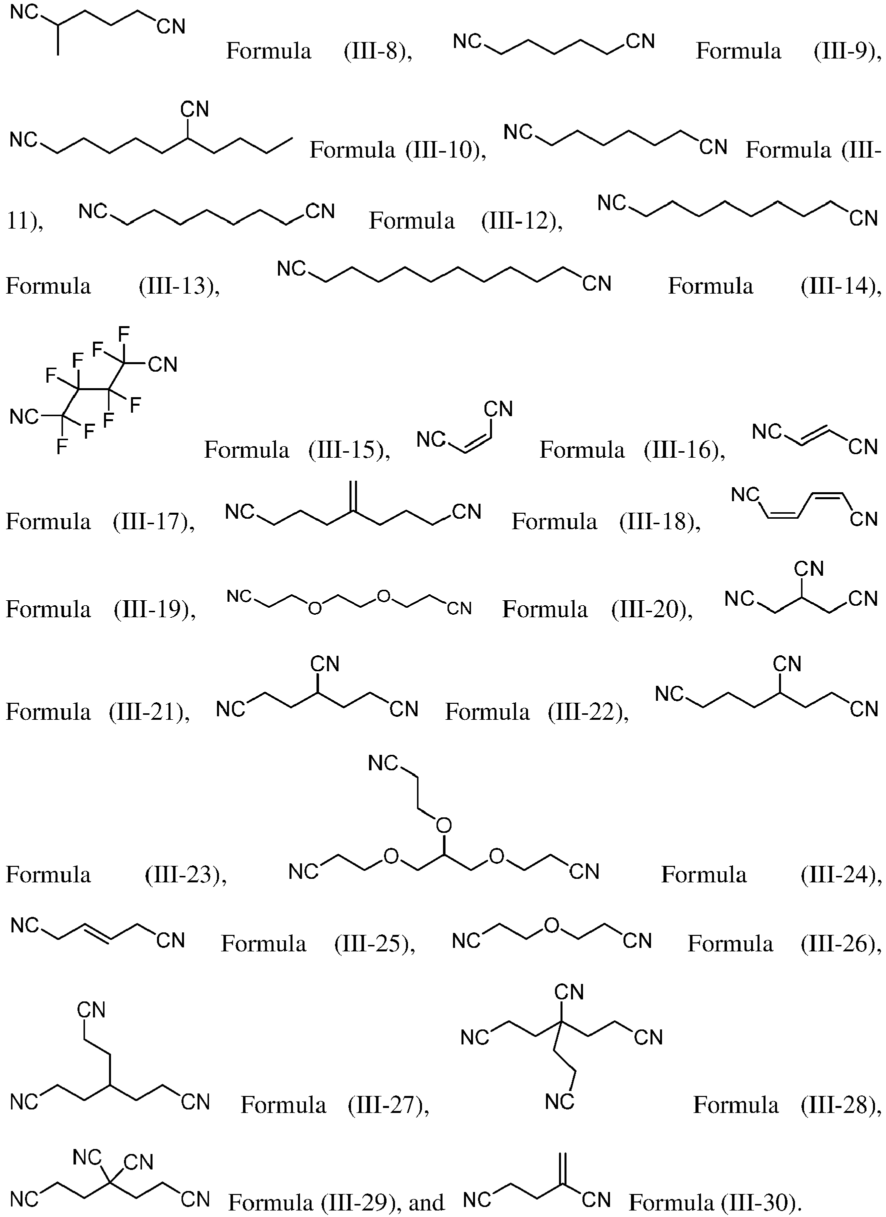

In some embodiments, the electrolytic solution further includes a compound represented by Formula IV-A:

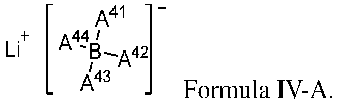

In the formula above, A⁴¹, A⁴², A⁴³, and A⁴⁴ are each independently selected from halogen, Formula (IV-B), Formula (IV-C), and Formula (IV-D): 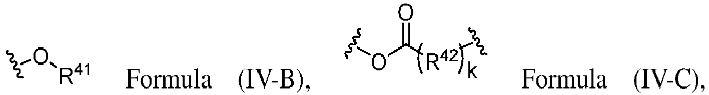 and

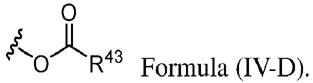

In Formula (IV-C), an O atom is connected to a B atom, and a C atom is connected to a C atom of another substituent, and k is 0 or 1.
R⁴¹ and R⁴³ are independently selected from a substituted or unsubstituted C₁ to C₆ alkyl and a substituted or unsubstituted C₂ to C₆ alkenyl, in which a substituent for substitution is halogen;
R⁴² is independently selected from a substituted or unsubstituted C₁ to C₆ alkylidene and a substituted or unsubstituted C₂ to C₆ alkenyl, in which a substituent for substitution is halogen.
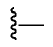 represents a site of bonding with two adjacent atoms.

Based on a mass of the electrolytic solution, a mass percent of the compound represented by Formula IV-A is 0.01% to 2%.

In some embodiments, the compound represented by Formula IV-A is at least one of lithium tetrafluoroborate (LiBF₄), lithium bis(oxalato)borate (LiBOB), or lithium difluoro(oxalato)borate (LiDFOB).

In some embodiments, the electrolytic solution further includes a compound represented by Formula V-A:

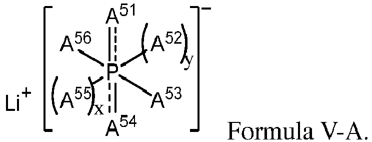

In the formula above, A⁵², A⁵³, A⁵⁵, and A⁵⁶ are each independently selected from halogen, a substituted or unsubstituted C₁ to C₆ alkyl, Formula (V-B), Formula (V-C), and Formula (V-D).

A⁵¹ and A⁵⁴ are each independently selected from an oxygen atom, halogen, a substituted or unsubstituted C₁ to C₆ alkyl, Formula (V-B), Formula (V-C), and Formula (V-D), where, when the substituent is halogen, A⁵¹, A⁵², A⁵³, A⁵⁴, A⁵⁵, and A⁵⁶ are not all fluorine:

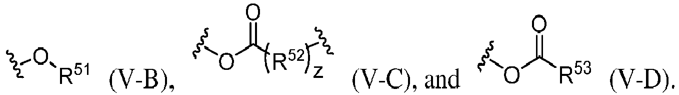

In the formula above, 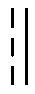 represents a single bond or a double bond, and x, y, and z are each independently represent 0 or 1.

When one 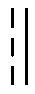 symbol in Formula (V-A) represents a single bond, one of x or y is 1, and the other is 0.

When both 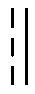 symbols in Formula (V-A) represent a single bond, both x and y are 1.

When both 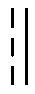 symbols in Formula (V-A) represent a double bond, both x and y are 0.

In Formula (V-C), an O atom is connected to a P atom, and a C atom is connected to a C atom of another substituent.

R⁵¹ and R⁵³ are independently selected from a substituted or unsubstituted C₁ to C₆ alkyl and a substituted or unsubstituted C₂ to C₆ alkenyl, in which a substituent for substitution is halogen.

R⁵² is independently selected from a substituted or unsubstituted C₁ to C₆ alkylidene and a substituted or unsubstituted C₂ to C₆ alkenyl, in which a substituent for substitution is halogen.

Based on a mass of the electrolytic solution, a mass percent of the compound represented by Formula V-A is 0.01% to 2%.

In some embodiments, the compound represented by Formula V-A is at least one of lithium difluorophosphate (LiPO₂F₂), lithium difluorobisoxalate phosphate (LiDFOP), or lithium tetrafluoro(oxalato)phosphate (LiTFOP).

In some embodiments, the electrolytic solution further includes at least one of a compound represented by Formula VI-A or a compound represented by Formula VI-B:

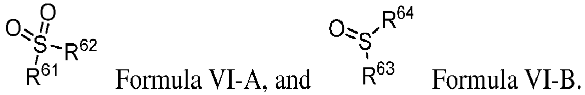

In the formula above, R⁶¹, R⁶², R⁶³, and R⁶⁴ are each independently selected from a substituted or unsubstituted C₁ to C₅ alkyl, a substituted or unsubstituted C₁ to C₅ alkylidene, a substituted or unsubstituted C₂ to C₁₀ alkenyl, a substituted or unsubstituted C₂ to C₁₀ alkynyl, a substituted or unsubstituted C₃ to C₁₀ alicyclyl, a substituted or unsubstituted C₆ to C₁₀ aryl, and a substituted or unsubstituted C₁ to C₆ heterocyclic group, in which a substituent for substitution is one or more of a halogen atom or a heteroatom-containing functional group, R⁶¹ and R⁶² are able to form a cyclic structure, and R⁶³ and R⁶⁴ are able to form a cyclic structure. An atom in the heteroatom-containing functional group is one or more selected from H, B, C, N, O, F, Si, P, or S. The heterocyclyl includes an aliphatic heterocyclyl and an aromatic heterocyclyl. Based on a mass of the electrolytic solution, an aggregate mass percent of the compound represented by Formula VI-A and the compound represented by Formula VI-B is 0.01% to 10%.

In some embodiments, the compound represented by Formula VI-A and the compound represented by Formula VI-B are each at least one selected from Formula (VI-1) to Formula (VI-43): 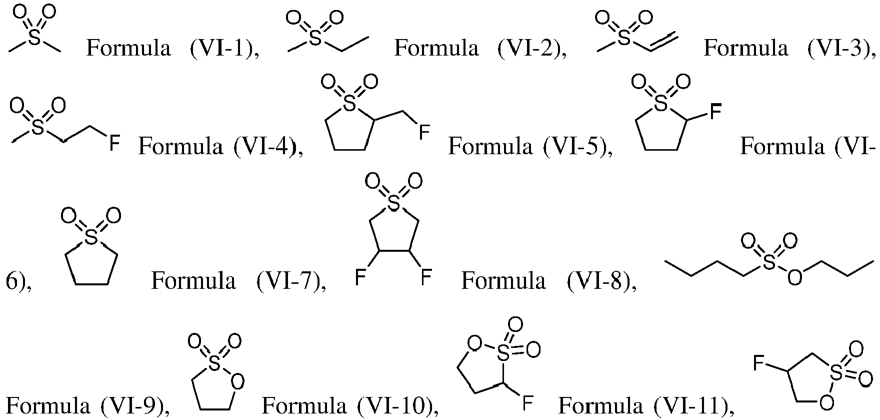 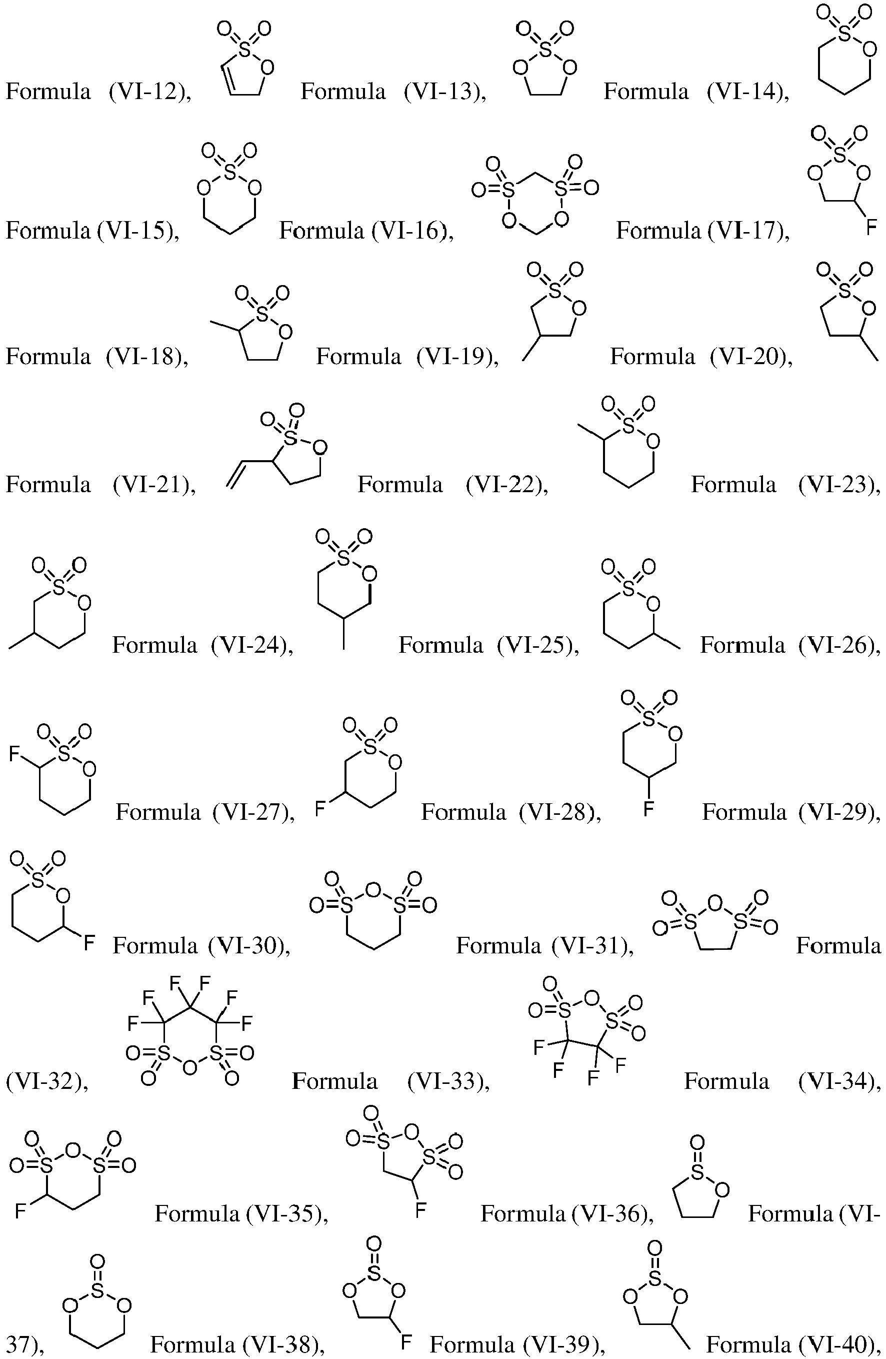 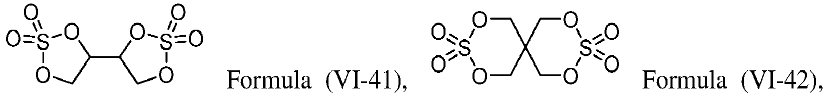 and

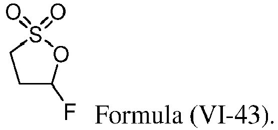

In some embodiments, the compound represented by Formula VI-A and the compound represented by Formula VI-B are each at least one of 1,3-propane sultone (PS), 1,4-butane sultone (BS), methylene methane disulfonate (MMDS), 1,3-propanedisulfonic anhydride, ethylene sulfate, ethylene sulfite, 4-methyl ethylene sulfate, 2,4-butane sultone, 2-methyl-1,3-propane sultone, 1,3-butane sultone, 1-fluoro-1,3-propane sultone, 2-fluoro-1,3-propane sultone, 3-fluoro-1,3-propane sultone, propenyl-1,3-sultone, propylene sulfate, propylene sulfite, or fluoroethylenesulfate.

In some embodiments, the electrolytic solution further includes a compound represented by Formula VII-A:

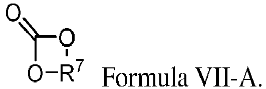

In the formula above, R⁷ is selected from a substituted or unsubstituted C₁ to C₆ alkylidene or a substituted or unsubstituted C₂ to C₆ alkenylene, in which a substituent for substitution is selected from halogen, a C₁ to C₆ alkyl, or a C₂ to C₆ alkenyl.

In some embodiments, based on a mass of the electrolytic solution, a mass percent of the compound represented by Formula VII-A is 0.01% to 30%.

In some embodiments, the compound represented by Formula VII-A is at least one selected from Formula (VII-1) to Formula (VII-12): 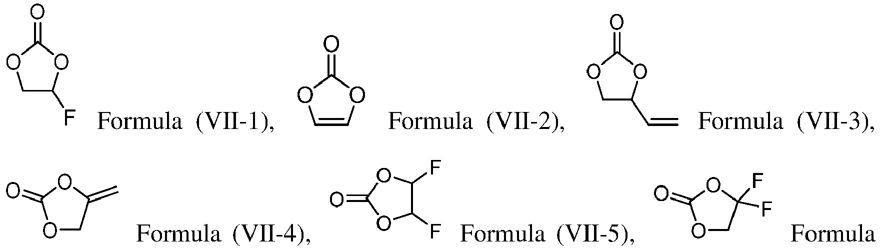 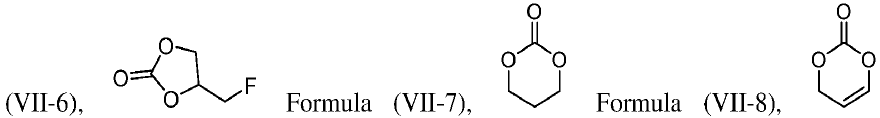 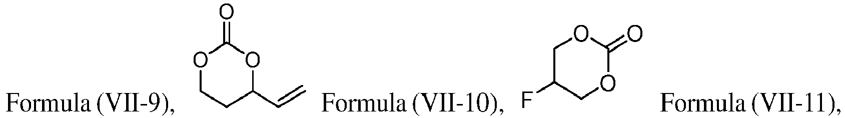 and

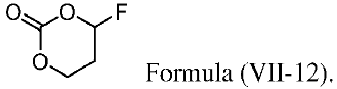

In some embodiments, the electrolytic solution satisfies at least one of the following conditions:
(1) based on a mass of the electrolytic solution, a mass percent of the compound represented by Formula I-A is 0.1% to 3.5%;
(2) based on the mass of the electrolytic solution, a mass percent of the compound represented by Formula II-A is 0.1% to 3.5%;
(3) based on the mass of the electrolytic solution, a sum of the mass percent of the compound represented by Formula I-A and the compound represented by Formula II-A is 0.5% to 6%;
(4) based on the mass of the electrolytic solution, a mass percent of a compound represented by Formula III-A is 0.1% to 6%;
(5) based on the mass of the electrolytic solution, a mass percent of a compound represented by Formula IV-A is 0.1% to 1.5%;
(6) based on the mass of the electrolytic solution, a mass percent of a compound represented by Formula V-A is 0.1% to 1.5%;
(7) based on the mass of the electrolytic solution, an aggregate mass percent of a compound represented by Formula VI-A and a compound represented by Formula VI-B is 0.1% to 5%; and
(8) based on the mass of the electrolytic solution, a mass percent of a compound represented by Formula VII-A is 0.1% to 10%.

In some embodiments, this application further provides an electrochemical device. The electrochemical device includes a positive electrode plate, a negative electrode plate, a separator, and the foregoing electrolytic solution.

In some embodiments, this application further provides an electronic device. The electronic device includes the foregoing electrochemical device.

This application achieves at least the following beneficial effects:

The electrolytic solution according to this application effectively improves high-temperature storage performance and cycle performance of the electrochemical device.

### DETAILED DESCRIPTION

Understandably, the disclosed embodiments are merely examples of this application, and this application may be implemented in various forms. Therefore, the details disclosed herein are not to be construed as a limitation, but are merely intended as a basis of the claims and as a representative basis for teaching a person of ordinary skill in the art to implement this application in various manners.

In the description of this application, unless otherwise expressly specified and defined, the terms such as "Formula I-A", "Formula II-A", "Formula III-A", "Formula IV-A", "Formula V-A", "first additive", "second additive", "third additive", "fourth additive", and "fifth additive" are merely used for ease of description, but are not to be understood as indicating or implying relative importance or a mutual relationship.

In the description of this application, unless otherwise specified, functional groups of all compounds may be substituted or unsubstituted.

### Electrolytic Solution

### [First additive]

In some embodiments, the electrolytic solution includes a first additive. The first additive includes a compound represented by Formula I-A and a compound represented by Formula II-A:

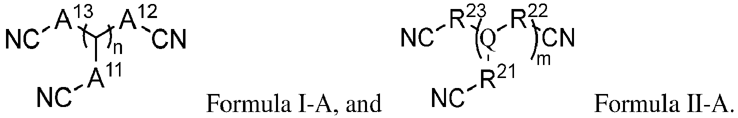

In Formula I-A, A¹¹, A¹², and A¹³ are each one independently selected from Formula (I-A1) and Formula (I-A2):

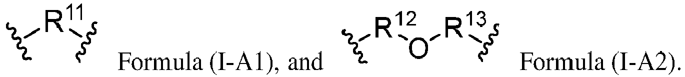

In Formula I-A, n is a positive integer ranging from 1 to 8; when there are a plurality of A¹¹ structures, the plurality of A¹¹ structures are identical or different; and at least two of the A¹¹, A¹², or A¹³ are selected from I-A2.

In Formula II-A, Q is independently selected from Formula (II-A1) and Formula (II-A2):

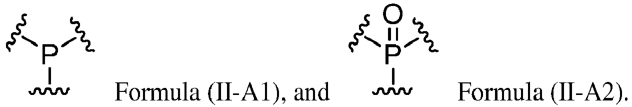

In Formula II-A, m is selected from 1 or 2.
R¹¹, R¹², R¹³, R²¹, R²², and R²³ are each independently selected from a covalent single bond, a substituted or unsubstituted C₁ to C₁₀ alkylidene, a substituted or unsubstituted C₂ to C₁₀ alkenyl, a substituted or unsubstituted C₂ to C₁₀ alkynyl, a substituted or unsubstituted C₆ to C₁₀ aryl, a substituted or unsubstituted C₃ to C₁₀ alicyclic hydrocarbyl, a substituted or unsubstituted C₁ to C₁₀ heterocyclyl, and a substituted or unsubstituted heteroatom-containing functional group, in which a substituent for substitution is halogen. The heterocyclyl includes an aliphatic heterocyclyl and an aromatic heterocyclyl.
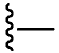 represents a site of bonding with an adjacent atom.

In this application, the compound represented by Formula I-A and the compound represented by Formula II-A are added in the electrolytic solution to significantly improve high-temperature storage performance and cycle performance of the electrochemical device containing the electrolytic solution. A possible reason is that the electrolytic solution contains an ether polycyano (-CN) compound and a phosphine polycyano (-CN) compound. The cyano group (-CN) can stabilize a high-valence transition metal of a positive electrode, and suppress continuous decomposition of the electrolytic solution. In addition, the phosphine polycyano (-CN) compound can form an interface protection film on both a positive electrode and a negative electrode to further protect surfaces of the positive electrode and the negative electrode. Therefore, the electrolytic solution doped with the compound represented by Formula I-A and the compound represented by Formula II-A can significantly improve high-temperature storage performance and cycle performance of the electrochemical device containing the electrolytic solution.

In some embodiments, the compound represented by Formula I-A includes at least one of compounds represented by Formula (1-1) to Formula (1-17): 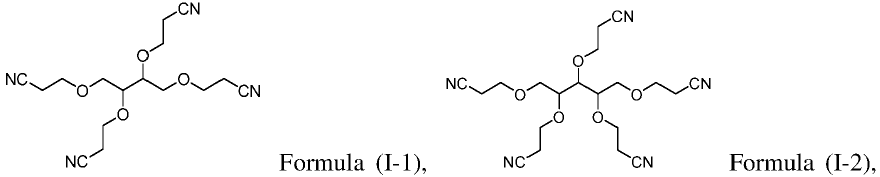 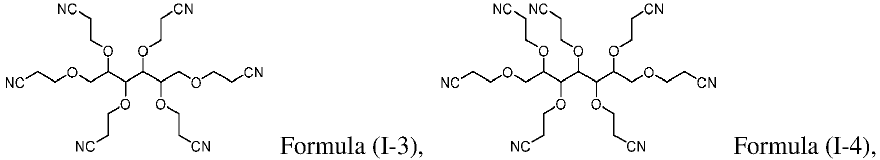 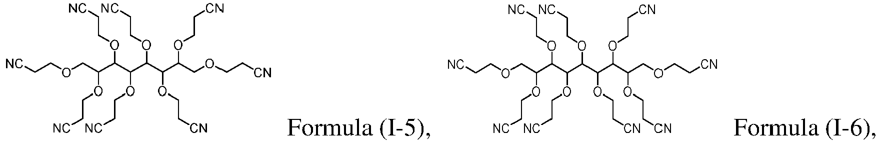 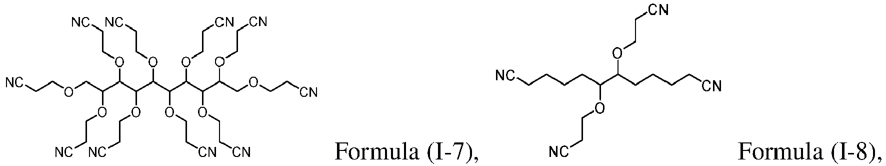 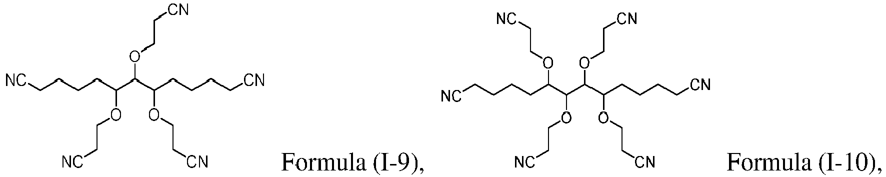 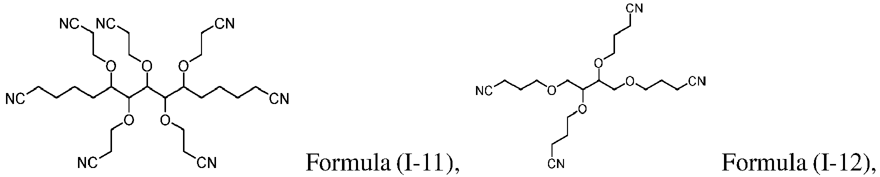 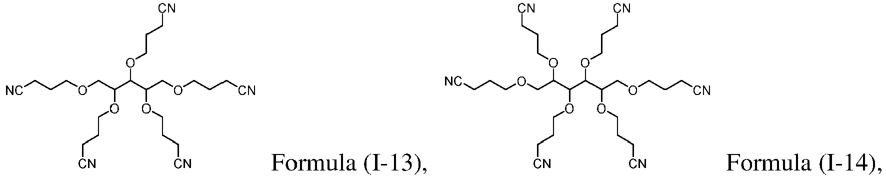 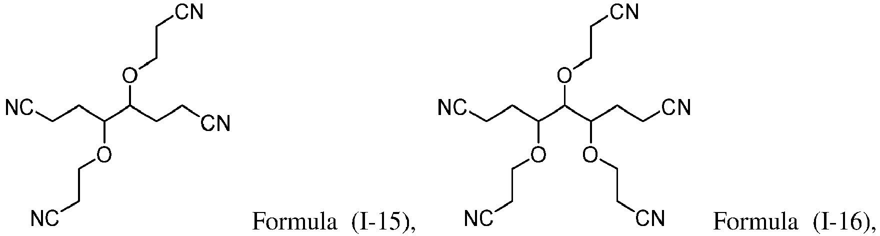 and

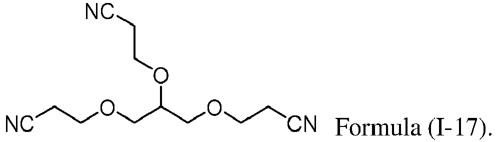

In some embodiments, the compound represented by Formula II-A includes at least one of compounds represented by Formula (II-1) to Formula (11-21): 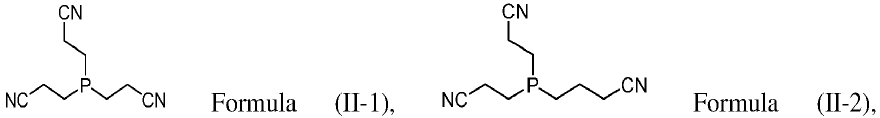 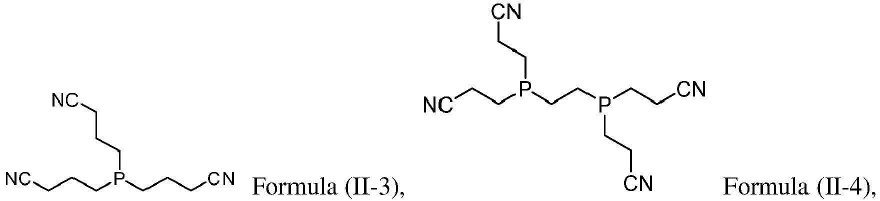 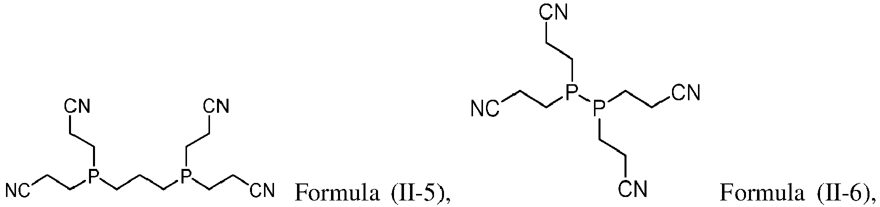 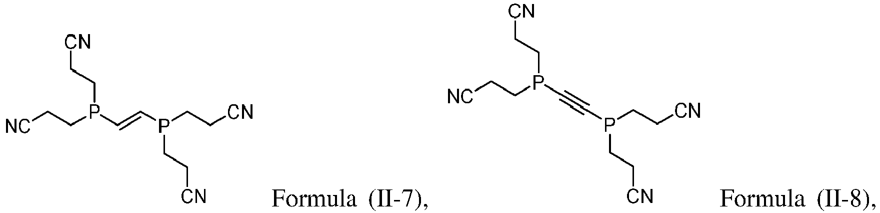 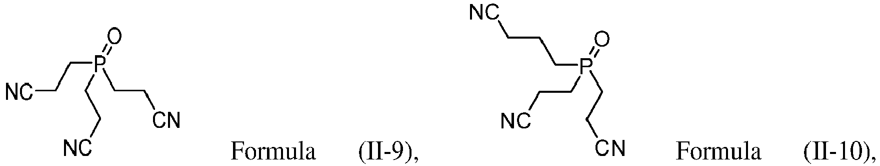 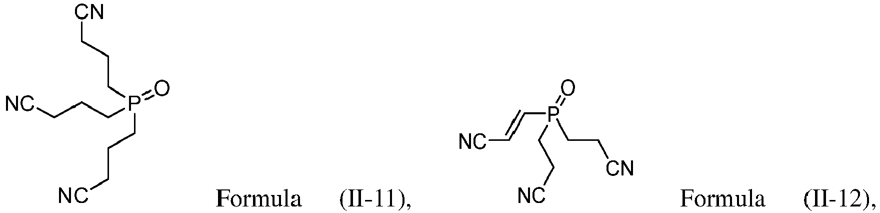 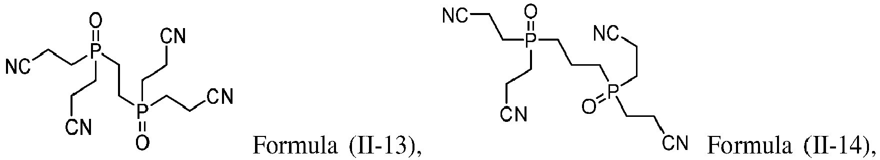 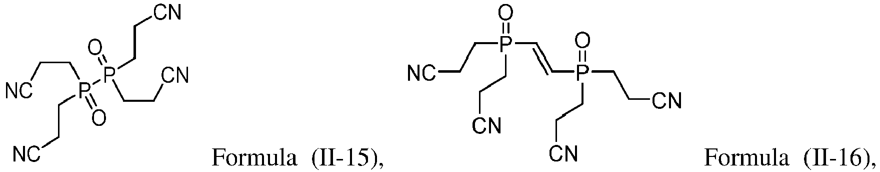 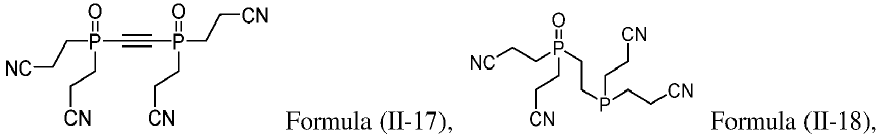 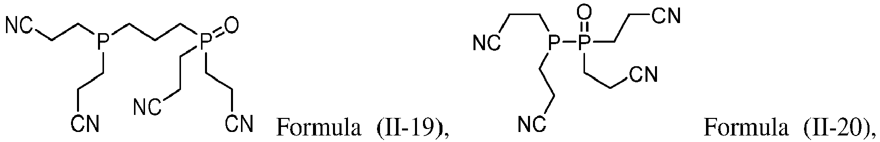 and

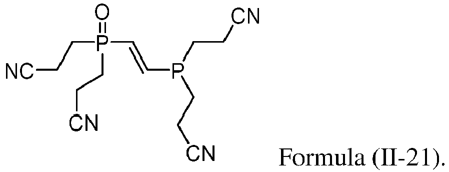

In some embodiments, based on a mass of the electrolytic solution, a mass percent of the compound represented by Formula I-A is x, and x satisfies 0.01% ≤ x ≤ 5%, and, in some embodiments, based on the mass of the electrolytic solution, the mass percent of the compound represented by Formula I-A is 0.1% to 3.5%. In some embodiments, based on the mass of the electrolytic solution, a mass percent of the compound represented by Formula II-A is y, and y satisfies 0.01% ≤ y ≤ 5%, and, in some embodiments, based on the mass of the electrolytic solution, the mass percent of the compound represented by Formula II-A is 0.1% to 3.5%.

When the mass percent of the compound represented by Formula I-A or the mass percent of the compound represented by Formula II-A falls within the foregoing range, the compound can further improve the cycle performance and high-temperature storage performance of the electrochemical device. If the mass percent of the compound represented by Formula I-A or the compound represented by Formula II-A is excessive, kinetic performance of the electrochemical device will be impaired, and the cycle performance will be impaired.

In some embodiments, based on the mass of the electrolytic solution, a sum of the mass percent of the compound represented by Formula I-A and the compound represented by Formula II-A satisfies 0.1 % ≤ x + y ≤ 10%. In some embodiments, based on the mass of the electrolytic solution, the sum of the mass percent of the compound represented by Formula I-A and the compound represented by Formula II-A is 0.5% to 6%. When the sum of the mass percent of the compound represented by Formula I-A and the compound represented by Formula II-A falls within the foregoing range, good kinetic performance of the electrochemical device is achieved without compromising stability of cathode and anode electrolyte interfaces, thereby further improving the cycle performance and high-temperature storage performance.

### [Second additive]

In some embodiments, the electrolytic solution further includes a second additive. The second additive includes the compound represented by Formula III-A:

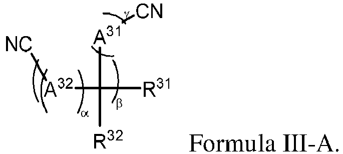

In the formula above, A³¹ and A³² are each one independently selected from halogen, Formula (III-B), and Formula (III-C):

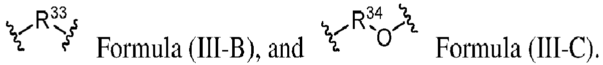

In the formula above, α and γ are each independently selected from 0 or 1, and β is independently selected from 0, 1, or 2.

R³¹ and R³² are each independently selected from hydrogen, halogen, a substituted or unsubstituted C₁ to C₁₀ alkyl, a substituted or unsubstituted C₂ to C₁₀ alkenyl, a substituted or unsubstituted C₂ to C₁₀ alkynyl, a substituted or unsubstituted C₂ to C₁₀ cyclyl, and a substituted or unsubstituted C₂ to C₁₀ heteroatom-containing functional group, in which a substituent for substitution is halogen.

R³³ and R³⁴ are each independently selected from a substituted or unsubstituted C₁ to C₁₀ alkylidene, a substituted or unsubstituted C₂ to C₁₀ alkenyl, a substituted or unsubstituted C₂ to C₁₀ alkynyl, a substituted or unsubstituted C₂ to C₁₀ cyclyl, and a substituted or unsubstituted C₂ to C₁₀ heteroatom-containing functional group, in which a substituent for substitution is halogen. The cyclyl includes an alicyclyl and a heterocyclyl.

When the second additive is added into the electrolytic solution, the cycle performance and high-temperature storage performance of the electrochemical device can be further improved. A possible reason is that the compound represented by Formula III-A can optimize the kinetic performance of the electrochemical device while protecting the stability of cathode and anode electrolyte interfaces more effectively.

In some embodiments, based on the mass of the electrolytic solution, the mass percent of the compound represented by Formula III-A is 0.1% to 10%. In some embodiments, based on the mass of the electrolytic solution, the mass percent of the compound represented by Formula III-A is 0.1% to 6%. When the mass percent of the compound represented by Formula III-A falls within the foregoing range, the electrochemical device achieves higher cycle performance and high-temperature storage performance.

In some embodiments, the compound represented by Formula III-A includes at least one of compounds represented by Formula (III-1) to Formula (III-30):

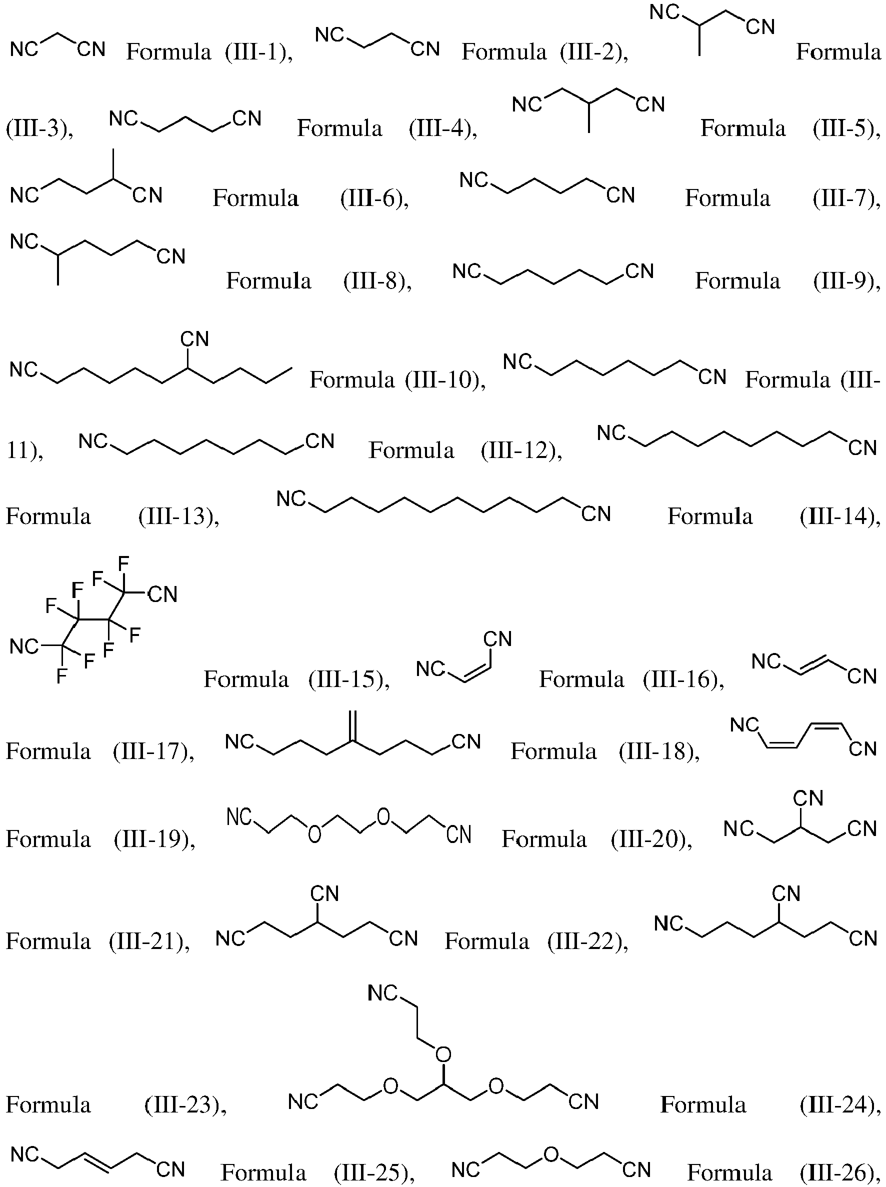

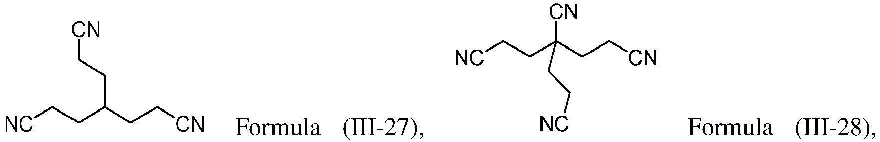

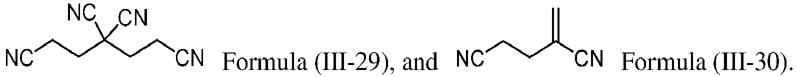

### [Third additive]

In some embodiments, the electrolytic solution further includes a third additive. The third additive includes the compound represented by Formula IV-A:

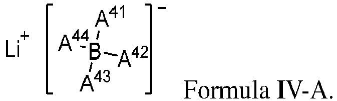

In the formula above, A⁴¹, A⁴², A⁴³, and A⁴⁴ are each independently selected from halogen, Formula (IV-B), Formula (IV-C), and Formula (IV-D): 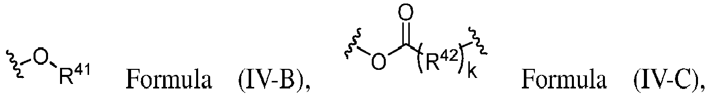 and

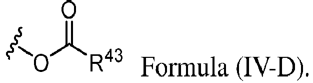

In Formula (IV-C), an O atom is connected to a B atom, and a C atom is connected to a C atom of another substituent.
k is 0 or 1.
R⁴¹ and R⁴³ are independently selected from a substituted or unsubstituted C₁ to C₆ alkyl and a substituted or unsubstituted C₂ to C₆ alkenyl, in which a substituent for substitution is halogen.
R⁴² is independently selected from a substituted or unsubstituted C₁ to C₆ alkylidene and a substituted or unsubstituted C₂ to C₆ alkenyl, in which a substituent for substitution is halogen.
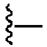 represents a site of bonding with two adjacent atoms.

When the third additive is added into the electrolytic solution, the cycle performance and high-temperature storage performance of the electrochemical device can be further improved. A possible reason is that the compound represented by Formula IV-A can form an interface film between the electrolyte and the positive electrode and/or the negative electrode, thereby further enhancing protection for the electrolyte interface.

In some embodiments, based on the mass of the electrolytic solution, the mass percent of the compound represented by Formula IV-A is 0.01% to 2%. In some embodiments, based on the mass of the electrolytic solution, the mass percent of the compound represented by Formula IV-A is 0.1% to 1.5%. When the mass percent of the compound represented by Formula IV-A falls within the foregoing range, the electrochemical device achieves higher cycle performance and high-temperature storage performance.

In some embodiments, the compound represented by Formula IV-A is at least one of lithium tetrafluoroborate (LiBF₄), lithium bis(oxalato)borate (LiBOB), or lithium difluoro(oxalato)borate (LiDFOB).

### [Fourth additive]

In some embodiments, the electrolytic solution further includes a fourth additive. The fourth additive includes the compound represented by Formula V-A:

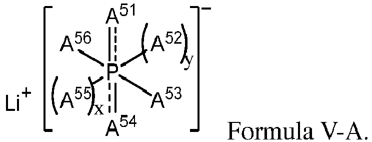

A⁵², A⁵³, A⁵⁵, and A⁵⁶ are each independently selected from halogen, a substituted or unsubstituted C₁ to C₆ alkyl, Formula (V-B), Formula (V-C), and Formula (V-D).

A⁵¹ and A⁵⁴ are each independently selected from an oxygen atom, halogen, a substituted or unsubstituted C₁ to C₆ alkyl, Formula (V-B), Formula (V-C), and Formula (V-D), where, when the substituent is halogen, A⁵¹, A⁵², A⁵³, A⁵⁴, A⁵⁵, and A⁵⁶ are not all fluorine:

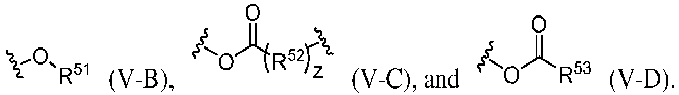

In the formula above, 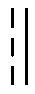 represents a single bond or a double bond, and x, y, and z each independently represent 0 or 1.

When one 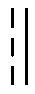 symbol in Formula (V-A) represents a single bond, one of x or y is 1, and the other is 0.

When both 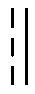 symbols in Formula (V-A) represent a single bond, both x and y are 1.

When both 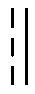 symbols in Formula (V-A) represent a double bond, both x and y are 0.

In Formula (V-C), an O atom is connected to a P atom, and a C atom is connected to a C atom of another substituent.

R⁵¹ and R⁵³ are independently selected from a substituted or unsubstituted C₁ to C₆ alkyl and a substituted or unsubstituted C₂ to C₆ alkenyl, in which a substituent for substitution is halogen.

R⁵² is independently selected from a substituted or unsubstituted C₁ to C₆ alkylidene and a substituted or unsubstituted C₂ to C₆ alkenyl, in which a substituent for substitution is halogen.

The electrolytic solution according to this application is doped with the compound represented by Formula V-A, and can form an interface film between the electrolyte and the positive electrode and/or negative electrode, thereby further enhancing protection for the electrolyte interface, suppressing continuous decomposition of the electrolytic solution, slowing down the increase in impedance, and improving the high-temperature storage performance and cycle performance of the electrochemical device.

In some embodiments, based on the mass of the electrolytic solution, the mass percent of the compound represented by Formula V-A is 0.01% to 2%. In some embodiments, based on the mass of the electrolytic solution, the mass percent of the compound represented by Formula V-A is 0.1% to 1.5%. When the mass percent of the compound represented by Formula V-A falls within the foregoing range, the electrochemical device achieves higher cycle performance and high-temperature storage performance.

In some embodiments, the compound represented by Formula V-A is at least one of lithium difluorophosphate (LiPO₂F₂), lithium difluorobisoxalate phosphate (LiDFOP), or lithium tetrafluoro(oxalato)phosphate (LiTFOP).

### [Fifth additive]

In some embodiments, the electrolytic solution further includes a fifth additive. The fifth additive includes at least one of the compound represented by Formula VI-A or the compound represented by Formula VI-B:

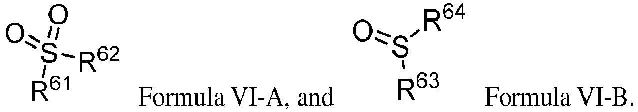

In the formula above, R⁶¹, R⁶², R⁶³, and R⁶⁴ are each independently selected from a substituted or unsubstituted C₁ to C₅ alkyl, a substituted or unsubstituted C₁ to C₅ alkylidene, a substituted or unsubstituted C₂ to C₁₀ alkenyl, a substituted or unsubstituted C₂ to C₁₀ alkynyl, a substituted or unsubstituted C₃ to C₁₀ alicyclyl, a substituted or unsubstituted C₆ to C₁₀ aryl, and a substituted or unsubstituted C₁ to C₆ heterocyclic group, in which a substituent for substitution is one or more of a halogen atom or a heteroatom-containing functional group, R⁶¹ and R⁶² are able to form a cyclic structure, and R⁶³ and R⁶⁴ are able to form a cyclic structure.

An atom in the heteroatom-containing functional group is one or more selected from H, B, C, N, O, F, Si, P, or S. The heterocyclyl includes an aliphatic heterocyclyl and an aromatic heterocyclyl.

The electrolytic solution may further include a compound represented by Formula VI-A or a compound represented by Formula VI-B. The compound represented by Formula VI-A and the compound represented by Formula VI-B are highly resistant to oxidation and can protect stability of the cathode electrolyte interface. On the other hand, reduction of the compound on the surface of the negative electrode forms a protection film to suppress decomposition of the electrolytic solution, thereby further enhancing stability of the interface and improving the cycle performance and high-temperature storage performance of the electrochemical device.

In some embodiments, the compound represented by Formula VI-A and the compound represented by Formula VI-B are each at least one selected from Formula (VI-1) to Formula (VI-43):

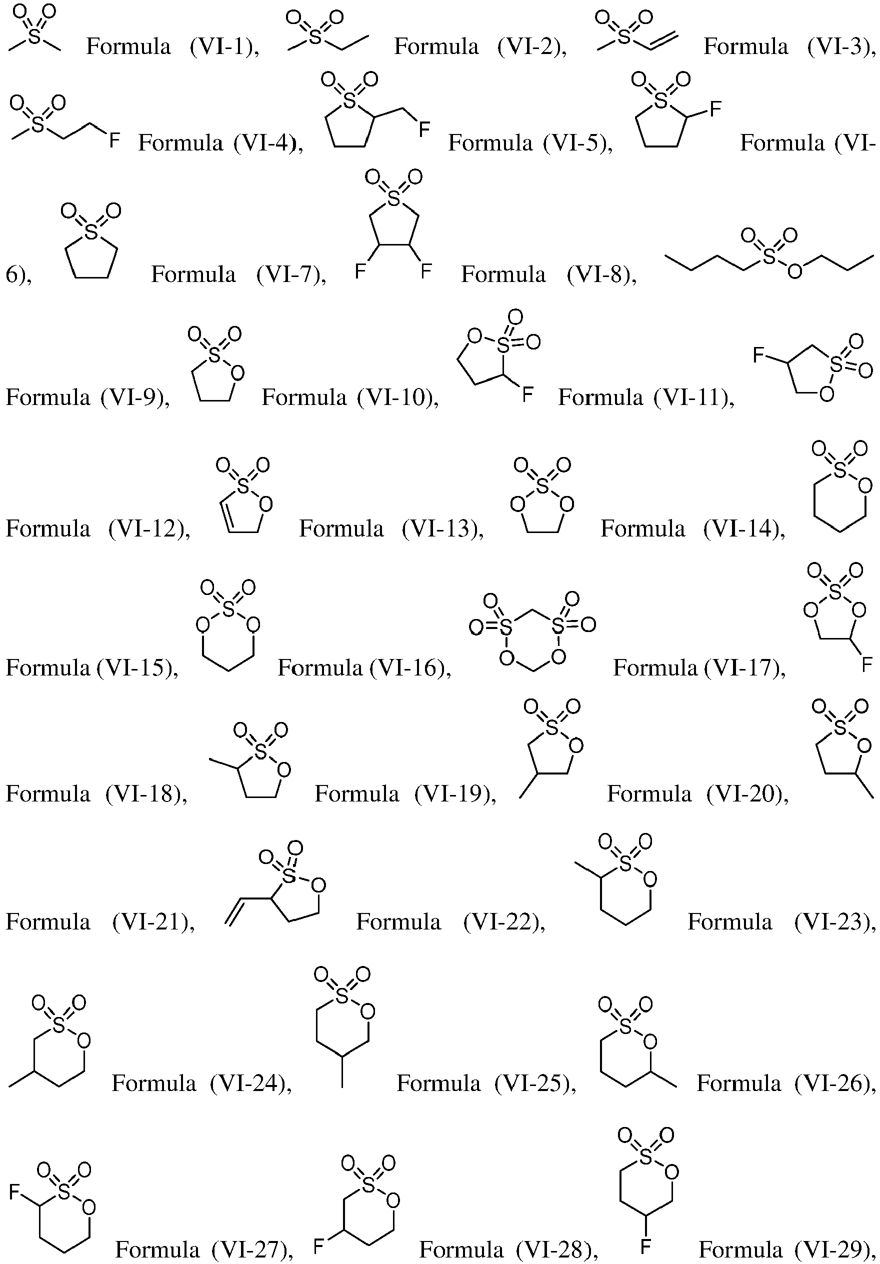

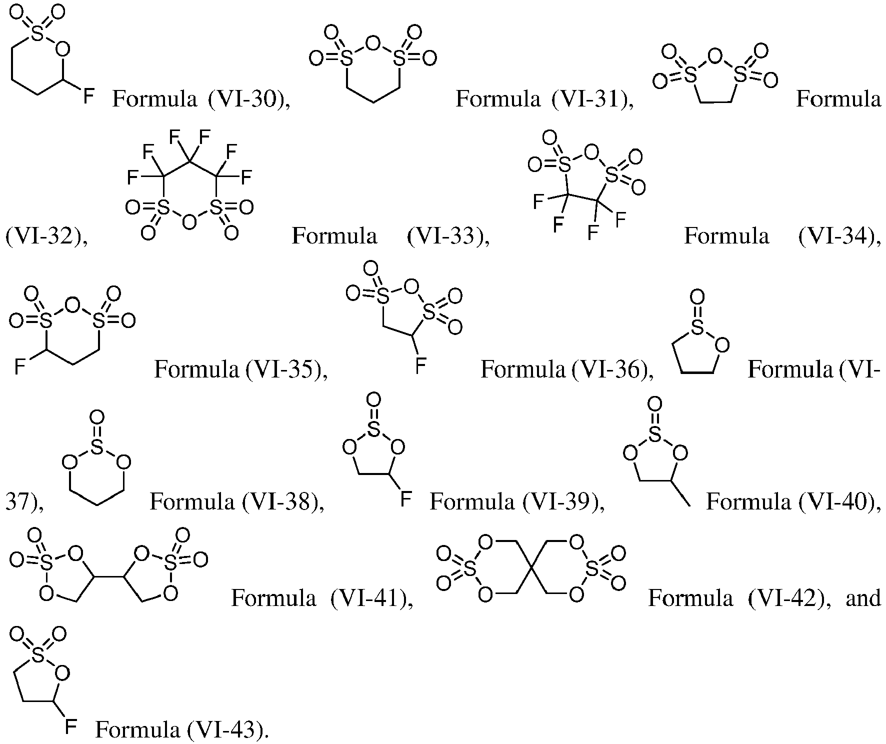

In some embodiments, the compound represented by Formula VI-A and the compound represented by Formula VI-B are each at least one of 1,3-propane sultone (PS), 1,4-butane sultone (BS), methylene methane disulfonate (MMDS), 1,3-propanedisulfonic anhydride, ethylene sulfate, ethylene sulfite, 4-methyl ethylene sulfate, 2,4-butane sultone, 2-methyl-1,3-propane sultone, 1,3-butane sultone, 1-fluoro-1,3-propane sultone, 2-fluoro-1,3-propane sultone, 3-fluoro-1,3-propane sultone, propenyl-1,3-sultone, propylene sulfate, propylene sulfite, or fluoroethylenesulfate.

In some embodiments, based on a mass of the electrolytic solution, an aggregate mass percent of the compound represented by Formula VI-A and the compound represented by Formula VI-B is 0.01% to 10%.

In some embodiments, based on a mass of the electrolytic solution, an aggregate mass percent of the compound represented by Formula VI-A and the compound represented by Formula VI-B is 0.1 % to 5 %.

When the aggregate mass percent of the compound represented by Formula VI-A and the compound represented by Formula VI-B falls within the foregoing range, the compounds can further improve the cycle performance and high-temperature storage performance of the electrochemical device.

### [Sixth additive]

In some embodiments, the electrolytic solution further includes a sixth additive. The sixth additive includes the compound represented by Formula VII-A:

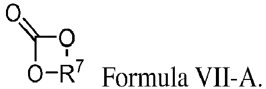

In the formula above, R⁷ is selected from a substituted or unsubstituted C₁ to C₆ alkylidene or a substituted or unsubstituted C₂ to C₆ alkenylene, in which a substituent for substitution is selected from halogen, a C₁ to C₆ alkyl, or a C₂ to C₆ alkenyl.

In some embodiments, the compound represented by Formula VII-A is at least one selected from Formula (VII-1) to Formula (VII-12):

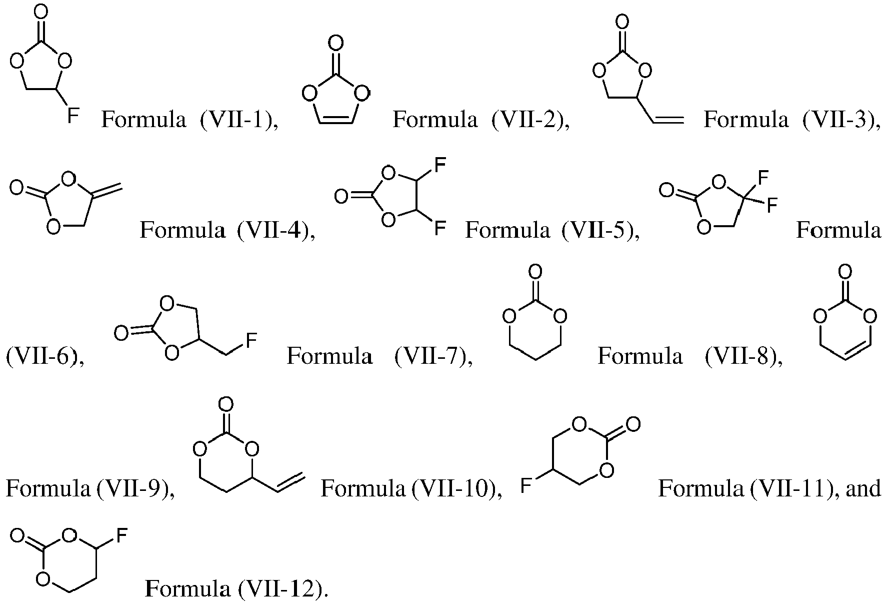

The electrolytic solution according to this application can further use the compound represented by Formula VII-A as an SEI film-forming additive to further assist in enhancing the SEI film-forming stability. The compound represented by Formula VII-A increases flexibility of the SEI film, further enhances protection for an active material, and reduces a probability of contact between the active material and the electrolyte interface, thereby suppressing impedance growth caused by accumulation of by-products during cycles and improving the cycle performance and high-temperature storage performance of the electrochemical device.

In some embodiments, based on a mass of the electrolytic solution, a mass percent of the compound represented by Formula VII-A is 0.01% to 30%. In some embodiments, based on a mass of the electrolytic solution, a mass percent of the compound represented by Formula VII-A is 0.1 % to 10 %. When the mass percent of the compound represented by Formula VII-A falls within the foregoing range, the compound can further improve the cycle performance and high-temperature storage performance of the electrochemical device.

In the electrolytic solution according to this application, the electrolytic solution may include one or more of the compound represented by Formula III-A, the compound represented by Formula IV-A, the compound represented by Formula V-A, the compound represented by Formula VI-A, the compound represented by Formula VI-B, or the compound represented by Formula VII-A.

### [Electrolyte salt]

The electrolytic solution according to this application further includes an electrolyte salt. The electrolyte salt is an electrolyte salt applicable to an electrochemical device as well known in the art. For each different electrochemical device, an appropriate electrolyte salt may be selected. For example, for a lithium-ion battery, the electrolyte salt is usually a lithium salt.

In some embodiments, the lithium salt includes at least one of an organic lithium salt or an inorganic lithium salt.

In some embodiments, the lithium salt includes at least one of lithium hexafluorophosphate (LiPF₆), lithium hexafluoroantimonate (LiSbF₆), lithium hexafluoroarsenate (LiAsF₆), lithium perfluorobutyl sulfonate (LiC₄F₉SO₃), lithium perchlorate (LiClO₄), lithium aluminate (LiAlO₂), lithium tetrachloroaluminate (LiAlCl₄), lithium bisfluorosulfonimide (LiN(CₓF₂ₓ₊₁SO₂) (C_{y}F_{2y+1}SO₂) (in which x and y are natural numbers), lithium chloride (LiCl), or lithium fluoride (LiF). In some embodiments, the mass percent of the lithium salt in the electrolytic solution according to this application is 10 wt% to 15 wt%, for example, may be 10%, 11%, 12%, 13%, 14%, 15%, or a value falling within a range formed by any two thereof.

### [Nonaqueous organic solvent]

The electrolytic solution according to this application further includes a nonaqueous organic solvent. In some embodiments, the nonaqueous organic solvent includes at least one of a carbonate solvent, a carboxylate solvent, an ether compound solvent, a sulfone compound solvent, or another aprotic solvent. In some embodiments, the mass percent of the nonaqueous solvent is 21% to 90%, for example, may be 21%, 30%, 40%, 50%, 60%, 70%, 80%, 90%, or a value falling within a range formed by any two thereof.

In some embodiments, the carbonate solvent includes at least one of dimethyl carbonate, diethyl carbonate, ethyl methyl carbonate, methyl propyl carbonate, ethyl propyl carbonate, dipropyl carbonate, ethylene carbonate, propylene carbonate, butylene carbonate, or bis(2,2,2-trifluoroethyl)carbonate.

In some embodiments, the carboxylate solvent includes at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, γ-butyrolactone, valerolactone, or butyrolactone.

In some embodiments, the ether compound solvent includes at least one of ethylene glycol dimethyl ether, diethylene glycol dimethyl ether, tetraethylene glycol dimethyl ether, dibutyl ether, tetrahydrofuran, 2-methyltetrahydrofuran, bis(2,2,2-trifluoroethyl) ether, 1,3-dioxane, or 1,4-dioxane.

In some embodiments, the sulfone compound includes at least one of ethyl vinyl sulfone, methyl isopropyl sulfone, isopropyl sec-butyl sulfone, or sulfolane.

The nonaqueous organic solvent in the electrolytic solution may be a single type of nonaqueous organic solvent or a mixture of different nonaqueous organic solvents. When the nonaqueous organic solvent is a mixed solvent, the mixing ratio may be controlled in view of the desired performance of the electrochemical device.

### Electrochemical Device

The electrochemical device according to this application is, for example, a primary battery or a secondary battery. The secondary battery is, for example, a lithium secondary battery. The lithium secondary battery includes but is not limited to a lithium metal secondary battery, a lithium-ion secondary battery, a lithium polymer secondary battery, or a lithium-ion polymer secondary battery.

In some embodiments, the electrochemical device includes a positive electrode plate, a negative electrode plate, a separator, and the electrolytic solution described herein above.

### [Positive electrode plate]

The positive electrode plate is a positive electrode plate applicable to an electrochemical device as well known in the art. In some embodiments, the positive electrode plate includes a positive current collector and a positive active material layer. The positive active material layer is disposed on a surface of the positive current collector. The positive active material layer includes a positive active material.

In some embodiments, the structure of the positive electrode plate is a positive electrode plate structure applicable to an electrochemical device as well known in the art.

In some embodiments, the positive current collector is a metal. The metal may be, but without being limited to, an aluminum foil.

The positive active material may be one of various positive active materials applicable to an electrochemical device as well known in the art, and may be a conventional well-known material that enables reversible intercalation and deintercalation of active ions.

In some embodiments, the positive active material includes lithium and a composite oxide that includes at least one of cobalt, manganese, or nickel. Specifically, the positive active material may be at least one of the following compounds: LiCoO₂, LiNiO₂, LiMnO₂, LiMn₂O₄, Li(NiₐCo_{b}Mn_{c})O₂ (0 < a < 1, 0 < b < 1, 0 < c < 1, a + b + c = 1), LiMn₂₀ₐLiNi_{1-y}Co_{y}O₂, LiCo_{1-y}Mn_{y}O₂, LiNi_{1-y}Mn_{y}O₂ (0 < y < 1), Li (NiₐMn_{b}Co_{c})O₄ (0 < a < 2, 0 < b < 2, 0 < c < 2, a + b + c = 2), LiMn_{2-z}Ni_{z}O₄, LiMn_{2-z}Co_{z}O₄ (0 < z < 2), Li(NiₐCo_{b}Al_{c})O₂ (0 < a < 1, 0 < b < 1, 0 < c < 1, a + b + c = 1), LiCoPO₄, and LiFePO₄, or may be a mixture of at least two thereof. In some embodiments, the positive active material further includes at least one of sulfide, selenide, or halide.

In some embodiments, the positive active material may be coated with a coating layer on a surface, or may be mixed with a compound coated with a coating layer. In some embodiments, the coating layer includes at least one compound of a coating element. The compound of a coating element is selected from: an oxide of a coating element, a hydroxide of a coating element, an oxyhydroxide of a coating element, an oxycarbonate of a coating element, and an alkaline carbonate of a coating element. In some embodiments, the compound for use in the coating layer may be non-crystalline or crystalline. In some embodiments, the coating element for use in the coating layer includes Mg, Al, Co, K, Na, Ca, Si, Ti, V, Sn, Ge, Ga, B, As, Zr, or a mixture thereof. In some embodiments, the coating layer may be formed by using any method as long as the inclusion of the element in the compound does not adversely affect the properties of the positive active material. For example, the method may include any coating method well known to a person skilled in the art, such as spraying and dip-coating.

In some embodiments, the positive active material layer further includes a positive binder and a positive conductive agent. The positive binder is configured to improve the binding performance between different positive active material particles, and between a positive active material particle and the current collector. In some embodiments, the positive binder includes at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene difluoride, polyethylene, polypropylene, styrene-butadiene rubber, acrylic (acrylate) styrene-butadiene rubber, epoxy resin, or nylon. The positive conductive agent serves to make the electrode conductive, and may include any conductive material so long as the material does not cause a chemical change. In some embodiments, the positive conductive agent includes at least one of natural graphite, artificial graphite, carbon black, acetylene black, Ketjen black, carbon fibers, metal powder, metal fibers, or a polyphenylene derivative. In some embodiments, the metal in the metal powder and the metal fibers includes at least one of copper, nickel, aluminum, or silver.

In some embodiments, a method for preparing the positive electrode plate is a positive electrode plate preparation method applicable to an electrochemical device as well known in the art. In some embodiments, in preparing a positive slurry, a solvent is usually added. After a binder, and as appropriate, a conductive material and a thickener, are added as positive active materials, the positive active materials are dissolved or dispersed in the solvent to make a positive slurry. The solvent is removed by volatilizing during drying. The solvent is a solvent suitable for use in a positive active material layer as well known in the art. The solvent may be, but without being limited to, N-methyl-pyrrolidone (NMP).

### [Negative electrode plate]

The negative electrode plate is a negative electrode plate applicable to an electrochemical device as well known in the art. In some embodiments, the negative electrode plate includes a negative current collector and a negative active material layer. The negative active material layer is disposed on a surface of the negative current collector. The negative active material layer includes a negative active material.

In some embodiments, a structure of the negative electrode plate is a negative electrode plate structure applicable to an electrochemical device as well known in the art.

In some embodiments, the negative current collector is metal, including but not limited to: a copper foil, a nickel foil, a stainless steel foil, a titanium foil, foamed nickel, foamed copper, or a polymer substrate clad with a conductive metal, or a combination thereof.

The negative active material may be one of various negative active materials applicable to an electrochemical device as well known in the art, and may be a conventional well-known material that enables reversible intercalation and deintercalation of active ions or enables reversible doping and stripping of active ions.

In some embodiments, the negative active material includes at least one of a lithium metal, a lithium metal alloy, a carbon material, a material that enables doping or stripping of lithium, or a transition metal oxide. In some embodiments, the carbon material may be one of various carbon materials suitable for use as a carbon-based negative active material of an electrochemical device as well known in the art. In some embodiments, the carbon material includes at least one of crystalline carbon or non-crystalline carbon. In some embodiments, the crystalline carbon is natural graphite or artificial graphite. In some embodiments, the crystalline carbon may be amorphous, plate-shaped, mini-sheet-shaped, spherical or fiber-shaped. In some embodiments, the crystalline carbon is low-crystallinity carbon or high-crystallinity carbon. In some embodiments, the low-crystallinity carbon includes at least one of soft carbon or hard carbon. In some embodiments, the high-crystallinity carbon includes at least one of natural graphite, crystalline graphite, pyrolytic carbon, mesophase pitch-based carbon fibers, mesophase carbon microbeads, mesophase pitch, or high-temperature calcined carbon.

In some embodiments, the high-temperature calcined carbon is petroleum, or is coke derived from coal tar pitch. In some embodiments, the non-crystalline carbon includes at least one of soft carbon, hard carbon, a mesophase pitch carbonization product, or fired coke. In some embodiments, the negative active material includes a transition metal oxide. In some embodiments, the transition metal oxide includes at least one of vanadium oxide or lithium vanadium oxide. In some embodiments, the negative active material includes at least one of Si, SiOₓ (0 < x < 2), a Si/C composite, a Si-Q alloy, Sn, SnO_{z}, a Sn-C composite, or a Sn-R alloy, where Q is at least one of an alkali metal, an alkaline earth metal, group-13 to group-16 elements, transition elements, or rare earth elements, and Q is an element other than Si. R is at least one of an alkali metal, an alkaline earth metal, group-13 to group-16 elements, transition elements, or rare earth elements, and R is an element other than Sn. In some embodiments, Q and R each include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, or Po.

In some embodiments, the negative active material layer further includes a negative binder and a negative conductive agent. In some embodiments, the negative binder includes at least one of poly(vinylidene difluoride-co-hexafluoropropylene) (PVDF-co-HFP), polyvinylidene difluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, an ethyleneoxide-containing polymer, polyvinylpyrrolidone, polyurethane, polytetrafluoroethylene, polyethylene, polypropylene, styrene-butadiene rubber, acrylic (acrylate) styrene-butadiene rubber, epoxy resin, or nylon. In some embodiments, the negative conductive agent serves to make the electrode conductive, and may include any conductive material so long as the material does not cause a chemical change. In some embodiments, the negative conductive agent includes any one of a carbon-based material, a metal-based material, or a conductive polymer, or a mixture thereof. In some embodiments, the carbon-based material includes at least one of natural graphite, artificial graphite, carbon black, acetylene black, Ketjen black, or carbon fibers. In some embodiments, the metal-based material includes at least one of metal powder or metal fibers containing copper, nickel, aluminum, silver, or the like. In some embodiments, the conductive polymer includes a polyphenylene derivative.

In some embodiments, a method for preparing the negative electrode plate is a negative electrode plate preparation method applicable to an electrochemical device as well known in the art. In some embodiments, in preparing a negative slurry, a solvent is usually added. After a binder, and as appropriate, a conductive material and a thickener are added as negative active materials, the negative active materials are dissolved or dispersed in the solvent to make a negative slurry. The solvent is removed by volatilizing during drying. The solvent is a solvent suitable for use in a negative active material layer as well known in the art. The solvent may be, but without being limited to, water. The thickener is a thickener suitable for use in a negative active material layer as well known in the art. The thickener may be, but without being limited to, sodium carboxymethyl cellulose.

The mixing ratio of the negative active material, the binder, and the thickener in the negative active material layer is not particularly limited in this application, and the mixing ratio may be controlled in view of the desired performance of the electrochemical device.

### [Separator]

The separator is a separator applicable to an electrochemical device as well known in the art. The separator may be, but without being limited to, a polyolefin-based microporous film. In some embodiments, the separator includes at least one of polyethylene (PE), poly(ethylene-co-propylene), polypropylene (PP), poly(ethyleneco-butene), poly(ethylene-co-hexene), or poly(ethylene-co-methyl methacrylate).

In some embodiments, the separator is a single-layer separator or a multilayer separator.

In some embodiments, the separator is coated with a coating layer. In some embodiments, the coating layer includes at least one of an organic coating layer or an inorganic coating layer. The organic coating is at least oneof polyvinylidene difluoride, poly(vinylidene difluoride-co-hexafluoropropylene), polyacrylonitrile, polyimide, poly (acrylonitrile-co-butadiene), poly (acrylonitrile-co- styrene-co-butadiene), polymethyl methacrylate, polymethyl acrylate, polyethyl acrylate, poly(acrylate-costyrene), polydimethylsiloxane, sodium polyacrylate, or sodium carboxymethyl cellulose. The inorganic coating layer is at least one of SiO₂, Al₂O₃, CaO, TiO₂, ZnO₂, MgO, ZrO₂, or SnO₂.

The form and thickness of the separator are not particularly limited in this application. The method for preparing the separator is a separator preparation method applicable to an electrochemical device as well known in the art.

### Electronic Device

The electronic device in this embodiment may be any electronic device, and may be, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, or lithium-ion capacitor. It is hereby noted that the electrochemical device according to this application is not only applicable to the electronic devices enumerated above, but also applicable to energy storage stations, marine transport vehicles, and air transport vehicles. The air transport vehicles include air transport vehicles in the atmosphere and space transport vehicles outside the atmosphere.

In some embodiments, the electronic device includes the electrochemical device described herein above.

This application is further described below with reference to some embodiments. Understandably, such embodiments are merely intended to illustrate this application but not to limit the scope of this application.

Unless otherwise expressly specified, reagents, materials, and instruments used in the following embodiments and comparative embodiments are all commercially available or obtained by synthesis. Reagents specifically used in the electrolytic solution are as follows:

### First additives:

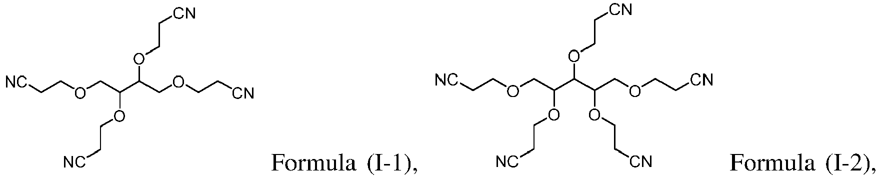

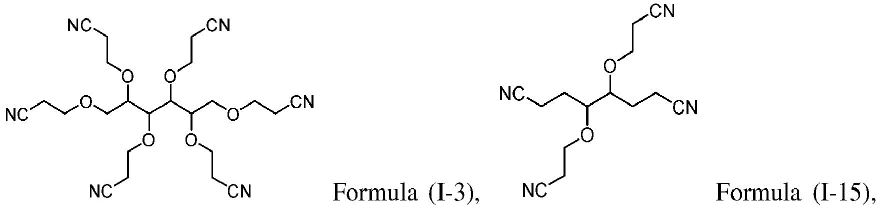

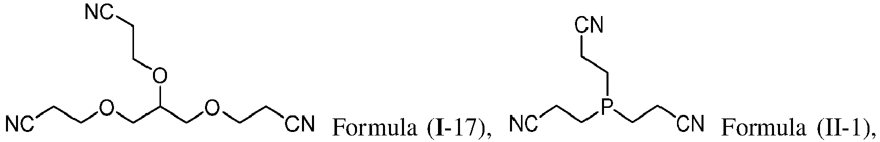

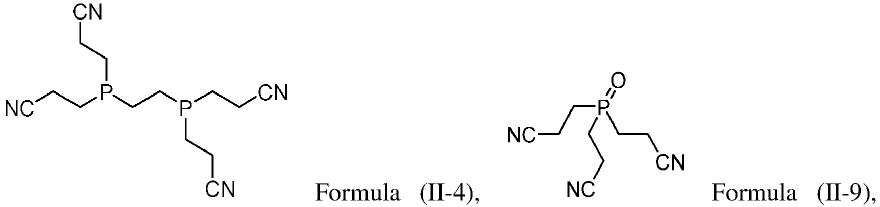

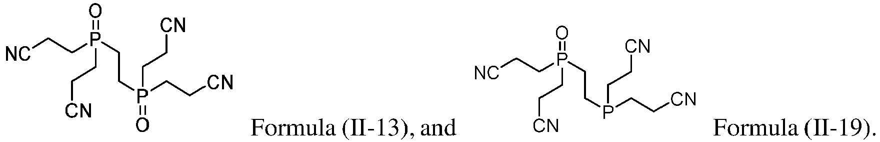

### Second additives:

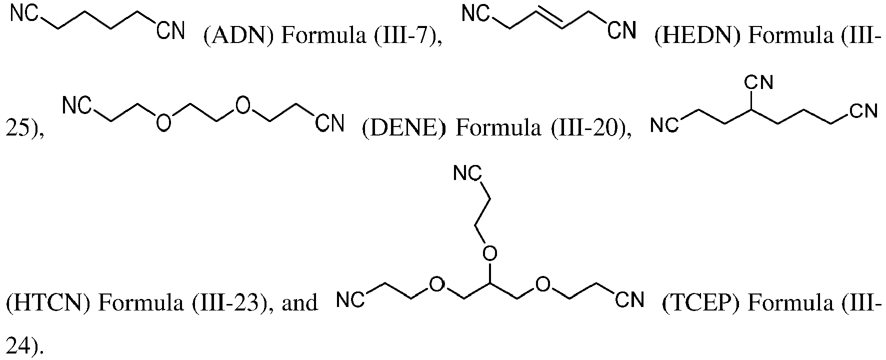

### Third additives:

Lithium tetrafluoroborate (LiBF₄), and lithium bis(oxalato)borate (LiBOB).

### Fourth additives:

Lithium difluorophosphate (LiPO₂F₂), and lithium difluorobisoxalate phosphate (LiDFOP).

### Fifth additives:

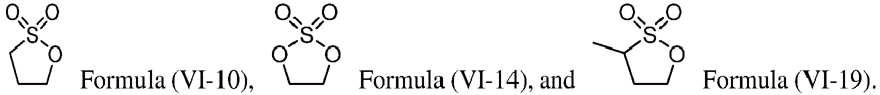

### Sixth additives:

Fluoroethylene carbonate (FEC) or vinylene carbonate (VC).

The lithium-ion batteries in Embodiments 1 to 63 and Comparative Embodiments 1 to 3 are prepared according to the following method:

### (1) Preparing an electrolytic solution

Mixing well ethylene carbonate (EC for short), propylene carbonate (PC for short), diethyl carbonate (DEC for short), and propyl propionate (PP for short) at a mass ratio of 1: 1: 1: 1 in an argon atmosphere glovebox in which the moisture content is less than 10 ppm, and then dissolving a well-dried lithium salt LiPF₆ in the foregoing nonaqueous solvent to obtain a base electrolytic solution in which the mass percent of the LiPF₆ is 12.5 wt%. Adding the compound represented by Formula I-A and the compound represented by Formula II-A into the base electrolytic solution, and then adding the compound represented by Formula III-A, the compound represented by Formula IV-A, the compound represented by Formula V-A, the compound represented by Formula VI-A, the compound represented by Formula VI-B, and the compound represented by Formula VII-A.

### (2) Preparing a positive electrode plate

Stirring and mixing lithium cobalt oxide (LCO) (molecular formula: LiCoO₂) as a positive active material, conductive carbon black, conductive slurry, and polyvinylidene difluoride (PVDF for short) as a binder in an appropriate amount of N-methyl-pyrrolidone (NMP for short) solvent thoroughly at a mass ratio of 97.9: 0.4: 0.5: 1.2 to form a homogeneous positive slurry, coating an aluminum foil as a positive current collector with the slurry, and performing drying, cold calendering, and tab welding to obtain a positive electrode plate, where a compacted density of the positive electrode is 4.15 g/cm³.

### (3) Preparing a separator

In some embodiments, using a single-layer PE porous polymer film as a separator (S), for example, where the thickness of the film is 5 microns, a porosity is 39%, an inorganic coating layer is Al₂O₃, and organic particles are polyvinylidene difluoride.

### (4) Preparing a negative electrode plate

Stirring and mixing graphite as a negative active material, styrene butadiene rubber (SBR for short) as a binder, and sodium carboxymethyl cellulose (CMC for short) as a thickener in an appropriate amount of deionized water solvent thoroughly at a mass ratio of 97.4: 1.4: 1.2 to form a homogeneous negative slurry, coating a copper foil as a negative current collector with the slurry, and performing drying and cold calendering to obtain a negative electrode plate, where a compacted density of the negative electrode is 1.80 g/cm³.

### (5) Preparing a lithium-ion battery

Stacking the positive electrode plate, the separator, and the negative electrode plate sequentially, letting the separator be located between the positive electrode plate and the negative electrode plate to serve a separation function, winding the plates to obtain a bare cell, placing the bare cell into an outer package foil, injecting the prepared electrolytic solution into the cell that is dried, and performing steps such as vacuum packaging, standing, chemical formation, and shaping to complete preparing the lithium-ion battery.

The types and content of additives used in Embodiments 1 to 63 and Comparative Embodiments 1 to 3 are shown in Table 1 to Table 6. The content of each additive is a weight percent calculated based on the total mass of the electrolytic solution.

The following describes a performance test process and test results of the lithium-ion battery.

### (1) Cycle test:

Charging the battery at a current of 0.7 C at a temperature of 25 °C until a voltage of 4.5 V, and then charging the battery at a constant voltage of 4.5 V until a current of 0.05 C. Subsequently, discharging the battery at a current of 0.7 C until a voltage of 3.0 V, and then subjecting the battery to 800 cycles. In each cycle, the battery is charged at 0.7 C and discharged at 1 C.

### (2) High-temperature storage test:

Charging the battery at a constant current of 0.5 C at a temperature of 25 °C until a voltage of 4.5 V, and then charging the battery at a constant voltage until a current of 0.05 C. Measuring the thickness of the lithium-ion battery, denoted as d₀. Placing the battery into an 85 °C oven to stay for 24 hours, and measuring the thickness at this time, denoted as d. Thickness expansion rate of the lithium-ion battery after 24 hours of high-temperature storage (%) = (d - d₀)/d₀ × 100%. The test stops as soon as the thickness expansion rate exceeds 50%.

**Table 1 Parameters in Embodiments 1 to 27 and Comparative Embodiments 1 to 3**

| Embodiment | First additive | | | | Performance test | |
|---|---|---|---|---|---|---|
| | Compound represented by Formula 1-A | | Compound represented by Formula II-A | | Capacity retention rate after 800 cycles completed at 25 °C | Thickness expansion rate of high-temperature storage |
| | Structural formula | wt% | Structural formula | wt% | | |
| Embodiment 1 | I-1 | 0.1 | II-1 | 0.01 | 73.70% | 36.80% |
| Embodiment 2 | I-1 | 0.5 | II-1 | 0.1 | 74.60% | 35.20% |
| Embodiment 3 | I-1 | 1 | II-1 | 0.2 | 77.10% | 33.30% |
| Embodiment 4 | I-1 | 2 | II-1 | 0.5 | 79.80% | 30.60% |
| Embodiment 5 | I-1 | 3 | II-1 | 1 | 80.60% | 33.00% |
| Embodiment 6 | I-1 | 5 | II-1 | 0.5 | 73.00% | 38.10% |
| Embodiment 7 | I-1 | 1 | II-1 | 2 | 78.40% | 30.20% |
| Embodiment 8 | I-1 | 1 | II-1 | 3 | 77.00% | 31.20% |
| Embodiment 9 | I-1 | 1 | II-1 | 5 | 72.10% | 39.50% |
| Embodiment 10 | I-1 | 5 | II-1 | 5 | 70.30% | 42.60% |
| Embodiment 11 | I-1 | 1.5 | II-4 | 0.5 | 80.20% | 32.70% |
| Embodiment 12 | I-1 | 1.5 | II-9 | 0.5 | 80.70% | 32.00% |
| Embodiment 13 | I-1 | 1.5 | II-13 | 0.5 | 81.50% | 31.60% |
| Embodiment 14 | I-1 | 1.5 | II-19 | 0.5 | 80.50% | 32.20% |
| Embodiment 15 | I-1 | 1.5 | II-1 | 0.3 | 79.70% | 31.90% |
| | | | II-9 | 0.2 | | |
| Embodiment 16 | I-1 | 1.5 | II-4 | 0.3 | 81.10% | 31.70% |
| | | | II-13 | 0.2 | | |
| Embodiment 17 | I-1 | 1.5 | II-4 | 0.3 | 80.90% | 32.00% |
| | | | II-13 | 0.1 | | |
| | | | II-19 | 0.1 | | |
| Embodiment 18 | I-17 | 1.5 | II-1 | 0.5 | 79.20% | 32.50% |
| Embodiment 19 | I-1 | 1.5 | II-1 | 0.5 | 79.30% | 32.20% |
| Embodiment 20 | I-2 | 1.5 | II-1 | 0.5 | 82.60% | 29.10% |
| Embodiment 22 | I-3 | 1.5 | II-1 | 0.5 | 85.90% | 29.60% |
| Embodiment 22 | I-15 | 1.5 | II-1 | 0.5 | 79.90% | 33.10% |
| Embodiment 23 | I-2 | 1.5 | II-9 | 0.5 | 83.80% | 28.60% |
| Embodiment 24 | I-3 | 1.5 | II-1 | 0.3 | 85.90% | 29.90% |
| | | | II-9 | 0.2 | | |
| Embodiment 25 | I-2 | 1.5 | II-13 | 0.5 | 84.60% | 28.00% |
| Embodiment 26 | I-3 | 1.5 | II-4 | 0.3 | 86.60% | 28.90% |
| | | | II-13 | 0.2 | | |
| Embodiment 27 | I-2 | 1 | II-1 | 0.5 | 85.10% | 29.30% |
| | I-3 | 0.5 | | | | |
| Comparative Embodiment 1 | / | / | / | / | 62.50% | Greater than 50% |
| Comparative Embodiment 2 | I-1 | 0.5 | / | / | 68.80% | 43.60% |
| Comparative Embodiment 3 | / | / | II-1 | 0.5 | 67.90% | 44.70% |

As can be seen from the embodiments and comparative embodiments in Table 1, adding the compound represented by Formula I-A and the compound represented by Formula II-A can significantly improve the cycle performance and the high-temperature storage performance. As the mass percent of the additives increases, the performance is improved to a higher degree. However, when the mass percent is excessive, the cycle performance and the high-temperature storage performance are adversely affected.

Increasing the charge voltage is one of the main methods to increase the energy density of the battery. However, the increase in the voltage intensifies the release of oxygen and accelerates decomposition of the electrolytic solution, thereby resulting in gas production and a shortened cycle life of the battery.

Cycled at 4.5 V, the lithium-ion battery doped with the compound represented by Formula I-A and the compound represented by Formula II-A is more excellent in the cycle performance and the high-temperature storage performance than the lithium-ion battery in Comparative Embodiment 1 that is not doped with the compound represented by Formula I-A or the compound represented by Formula II-A. The cyano group (-CN) can stabilize a high-valence transition metal. In addition, the compound represented by Formula I-A and the compound represented by Formula II-A can protect stability of the cathode electrolyte interface and the anode electrolyte interface, suppress consumption of the electrolytic solution, reduce side reactions, and suppress gas production, and in turn, improve cycle performance and high-temperature storage performance.

**Table 2 Parameters in Embodiments 19 and 28 to 36**

| Embodiment | First additive | | | | Fifth additive | | | Performance indicator | |
|---|---|---|---|---|---|---|---|---|---|
| | Compound represented by Formula I-A | | Compound represented by Formula II-A | | Compound represented by Formula VI-A or Formula VI-B | | | Capacity retention rate after 800 cycles completed at 25 °C | Thickness expansion rate of high-temperature storage |
| | Structural formula | wt% | Structural formula | wt% | VI-10 | VI-14 | VI-19 | | |
| | | | | | wt% | wt% | wt% | | |
| Embodiment 19 | I-1 | 1.5 | II-1 | 0.5 | / | / | / | 79.30% | 32.20% |
| Embodiment 28 | I-1 | 1.5 | II-1 | 0.5 | 1 | | | 79.50% | 30.50% |
| Embodiment 29 | I-1 | 1.5 | II-1 | 0.2 | 2 | 0.5 | | 79.90% | 29.00% |
| Embodiment 30 | I-1 | 1.5 | II-1 | 0.2 | 3 | 1 | | 80.30% | 27.20% |
| Embodiment 31 | I-1 | 1.5 | II-1 | 0.3 | 1 | 1 | 2 | 80.50% | 27.00% |
| | | | II-9 | 0.2 | | | | | |
| Embodiment 32 | I-1 | 1.5 | II-4 | 0.3 | 4 | 0.5 | | 81.60% | 26.80% |
| | | | II-13 | 0.2 | | | | | |
| Embodiment 33 | I-2 | 1.5 | II-1 | 0.5 | 4 | 0.5 | | 83.10% | 24.20% |
| Embodiment 34 | I-3 | 1.5 | II-4 | 0.3 | | 0.5 | 4 | 86.90% | 24.00% |
| | | | II-13 | 0.2 | | | | | |
| Embodiment 35 | I-3 | 1.5 | II-1 | 0.3 | 4 | 0.5 | | 86.30% | 24.30% |
| | | | II-4 | 0.2 | | | | | |
| Embodiment 36 | I-2 | 1 | II-1 | 0.3 | 1 | 1 | 2 | 84.50% | 24.60% |
| | I-3 | 0.5 | II-13 | 0.2 | | | | | |

As can be seen from the embodiments in Table 2, the cycle performance and the high-temperature storage performance of the lithium-ion battery are further improved by adding the compound represented by Formula VI-A or the compound represented by Formula VI-B.

**Table 3 Parameters in Embodiments 19 and 37 to 41**

| Embodiment | First additive | | Sixth additive | | Performance test | |
|---|---|---|---|---|---|---|
| | Compound represented by Formula I-A and compound represented by Formula II-A | | Compound represented by Formula VII-A | | Capacity retention rate after 800 cycles completed at 25 °C | Thickness expansion rate of high-temperature storage |
| | Structural formula | wt% | Type | wt% | | |
| Embodiment 19 | I-1 | 1.5 | / | / | 79.30% | 32.20% |
| | II-1 | 0.5 | | | | |
| Embodiment 37 | I-1 | 1.5 | FEC | 1 | 81.20% | 31.00% |
| | II-1 | 0.5 | | | | |
| Embodiment 38 | I-1 | 1.5 | FEC | 5 | 85.90% | 33.90% |
| | II-1 | 0.5 | | | | |
| Embodiment 39 | I-1 | 1.5 | VC | 0.1 | 79.80% | 31.70% |
| | II-1 | 0.5 | | | | |
| Embodiment 40 | I-1 | 1.5 | VC | 0.5 | 80.50% | 30.10% |
| | II-1 | 0.5 | | | | |
| Embodiment 41 | I-1 | 1.5 | FEC | 5 | 87.30% | 34.20% |
| | II-1 | 0.5 | VC | 0.5 | | |

As can be seen from the embodiments in Table 3, the cycle performance of the lithium-ion battery is significantly improved by adding the compound represented by Formula VII-A in addition to the first additive.

**Table 4 Parameters in Embodiments 19 and 42 to 48**

| Embodiment | First additive | | Second additive | | Performance test | |
|---|---|---|---|---|---|---|
| | Compound represented by Formula I-A and compound represented by Formula II-A | | Compound represented by Formula 111-A | | Capacity retention rate after 800 cycles completed at 25 °C | Thickness expansion rate of high-temperature storage |
| | Structural formula | wt% | Type | wt% | | |
| Embodiment 19 | I-1 | 1.5 | | | 79.30% | 32.20% |
| | II-1 | 0.5 | | | | |
| Embodiment 42 | I-1 | 1.5 | ADN | 0.5 | 79.50% | 31.20% |
| | II-1 | 0.5 | | | | |
| Embodiment 43 | I-1 | 1.5 | ADN | 1 | 79.60% | 30.70% |
| | II-1 | 0.5 | | | | |
| Embodiment 44 | I-1 | 1.5 | ADN | 2.5 | 79.50% | 27.90% |
| | II-1 | 0.5 | | | | |
| Embodiment 45 | I-1 | 1.5 | ADN | 2.5 | 80.20% | 26.90% |
| | II-1 | 0.5 | HTCN | 0.5 | | |
| Embodiment 46 | I-1 | 1.5 | ADN | 2.5 | 80.30% | 26.00% |
| | | | HTCN | 0.5 | | |
| | II-1 | 0.5 | DENE | 1 | | |
| Embodiment 47 | I-1 | 1.5 | ADN | 2.5 | 80.20% | 25.20% |
| | | | HTCN | 0.5 | | |
| | II-1 | 0.5 | HEDN | 0.5 | | |
| | | | DENE | 1 | | |
| Embodiment 48 | I-1 | 1 | ADN | 2.5 | 81.50% | 19.60% |
| | I-2 | 0.5 | HTCN | 1 | | |
| | II-1 | 0.3 | | | | |
| | II-9 | 0.2 | TCEP | 0.5 | | |

As can be seen from the embodiments in Table 4, the high-temperature storage performance of the lithium-ion battery is improved by using the compound represented by Formula I-A, the compound represented by Formula II-A, and the compound represented by Formula III-A as combined additives.

**Table 5 Parameters in Embodiments 19 and 49 to 55**

| Embodiment | First additive | | Third additive | | Performance test | |
|---|---|---|---|---|---|---|
| | Compound represented by Formula I-A and compound represented by Formula II-A | | Compound represented by Formula IV-A | | Capacity retention rate after 800 cycles completed at 25 °C | Thickness expansion rate of high-temperature storage |
| | Structural formula | wt% | LiBF₄ | LiBOB | | |
| | | | wt% | wt% | | |
| Embodiment 19 | I-1 | 1.5 | | | 79.30% | 32.20% |
| | II-1 | 0.5 | | | | |
| Embodiment 49 | I-1 | 1.5 | | 0.1 | 79.70% | 37.10% |
| | II-1 | 0.5 | | | | |
| Embodiment 50 | I-1 | 1.5 | | 0.2 | 80.90% | 37.50% |
| | II-1 | 0.5 | | | | |
| Embodiment 51 | I-1 | 1.5 | | 0.5 | 81.70% | 37.90% |
| | II-1 | 0.5 | | | | |
| Embodiment 52 | I-1 | 1.5 | | 0.7 | 83.20% | 38.50% |
| | II-1 | 0.5 | | | | |
| Embodiment 53 | I-1 | 1.5 | | 1 | 83.50% | 39.60% |
| | II-1 | 0.5 | | | | |
| Embodiment 54 | I-1 | 1.5 | 0.2 | | 80.10% | 35.70% |
| | II-1 | 0.5 | | | | |
| Embodiment 55 | I-1 | 1.5 | 0.1 | 0.5 | 82.60% | 36.20% |
| | II-1 | 0.5 | | | | |

As can be seen from the embodiments in Table 4, the cycle performance and the high-temperature storage performance of the lithium-ion battery are improved by using the compound represented by Formula I-A, the compound represented by Formula II-A, and the compound represented by Formula IV-A in combination.

**Table 6 Parameters in Embodiments 19 and 56 to 63**

| Embodiment | First additive | | Fifth additive | | Second additive | | Third additive | | Sixth additive | Performance test | |
|---|---|---|---|---|---|---|---|---|---|---|---|
| | Compound represented by Formula I-A and compound represented by Formula II-A | | Compound represented by Formula VI-A or Formula VI-B | | Compound represented by Formula III-A | | Compound represented by Formula IV-A | | Type and content of compounds represented by Formula VII-A | Capacity retention rate after 800 cycles completed at 25 °C | Thickness expansion rate of high-temperature storage |
| | Structural formula | wt% | Structural formula | wt% | Type | wt% | LiBF₄ | LiBOB | | | |
| | | | | | | | wt% | wt% | wt% | | |
| Embodiment 19 | I-1 | 1.5 | / | / | / | / | / | / | | 79.30% | 32.20% |
| | II-1 | 0.5 | | | | | | | | | |
| Embodiment 56 | I-2 | 1.5 | VI-10 | 4 | ADN | 2.5 | | | | 84.10% | 22.80% |
| | II-1 | 0.3 | | | HTCN | 0.5 | | | | | |
| | II-9 | 0.2 | VI-14 | 0.5 | DENE | 1 | | | | | |
| Embodiment 57 | I-2 | 1 | VI-10 | 4 | | | | 0.5 | | 85.20% | 25.70% |
| | I-3 | 0.5 | | | | | | | | | |
| | II-1 | 0.5 | VI-14 | 0.5 | | | | | | | |
| Embodiment 58 | I-3 | 1.5 | | | ADN | 2.5 | | 0.5 | | 88.30% | 23.80% |
| | II-4 | 0.3 | | | HTCN | 0.5 | | | | | |
| | II-13 | 0.2 | | | DENE | 1 | | | | | |
| Embodiment 59 | I-1 | 0.5 | VI-10 | 4 | ADN | 2.5 | 0.1 | 0.5 | | 87.50% | 23.20% |

| Embodiment | First additive | | Fifth additive | | Second additive | | Third additive | | Sixth additive | Performance test | |
|---|---|---|---|---|---|---|---|---|---|---|---|
| | Compound represented by Formula I-A and compound represented by Formula II-A | | Compound represented by Formula VI-A or Formula VI-B | | Compound represented by Formula III-A | | Compound represented by Formula IV-A | | Type and content of compounds represented by Formula VII-A | Capacity retention rate after 800 cycles completed at 25 °C | Thickness expansion rate of high-temperature storage |
| | Structural formula | wt% | Structural formula | wt% | Type | wt% | LiBF₄ | LiBOB | | | |
| | | | | | | | wt% | wt% | wt% | | |
| | I-2 | 0.5 | | | | | | | | | |
| | I-3 | 0.5 | | | HTCN | 0.5 | | | | | |
| | II-1 | 0.3 | | | | | | | | | |
| | II-4 | 0.2 | VI-14 | 0.5 | DENE | 1 | | | | | |
| Embodiment 60 | I-1 | 1.5 | | | | | | | FEC (3) | 86.70% | 34.20% |
| | II-1 | 0.5 | | | | | | | | | |
| Embodiment 61 | I-1 | 1.5 | | | | | | | FEC (3), VC (0.5) | 87.90% | 33.70% |
| | II-1 | 0.5 | | | | | | | | | |
| Embodiment 62 | I-1 | 1.5 | | | HTCN | 0.5 | | | FEC (3) | 87.20% | 28.50% |
| | II-1 | 0.5 | | | AND | 2.5 | | | | | |
| Embodiment 63 | I-1 | 1.5 | VI-10 | 4 | HTCN | 0.5 | | | FEC (3) | 89.60% | 24.70% |
| | II-1 | 0.5 | VI-14 | 0.5 | AND | 2.5 | | | | | |

As can be seen from Embodiments 19 to 63, in a lithium cobalt oxide system, the cycle performance and the high-temperature storage performance are improved by combining the compound represented by Formula I-A and the compound represented by Formula II-A with at least two of: the compound represented by Formula III-A, the compound represented by Formula IV-A, the compound represented by Formula VI-A or Formula VI-B, or the compound represented by Formula VII-A. When a plurality of compounds are used in combination, the stability of the cathode electrolyte interface and the anode electrolyte interface can be further strengthened, the decomposition of the electrolytic solution can be suppressed, and the performance of the lithium-ion battery can be enhanced.

The lithium-ion batteries in Embodiments 64 to 80 and Comparative Embodiments 4 to 6 are prepared according to the following method:

### (1) Preparing an electrolytic solution

Mixing well ethylene carbonate (EC for short), propylene carbonate (PC for short), and diethyl carbonate (DEC for short) at a mass ratio of 3: 3: 4 in an argon atmosphere glovebox in which the moisture content is less than 10 ppm, and then dissolving a well-dried lithium salt LiPF₆ in the foregoing nonaqueous solvent to obtain a base electrolytic solution in which the mass percent of the LiPF₆ is 12.5%. Adding the compound represented by Formula I-A and the compound represented by Formula II-A into the base electrolytic solution, and then adding the compound represented by Formula III-A, the compound represented by Formula IV-A, the compound represented by Formula V-A, the compound represented by Formula VI-A, the compound represented by Formula VI-B, and the compound represented by Formula VII-A.

### (2) Preparing a positive electrode plate

Stirring and mixing well NCM811 (molecular formula: EiNi_{0.8}Mn_{0.1}Co_{0.1}O₂) as a positive active material, acetylene black as a conductive agent, and polyvinylidene difluoride (PVDF for short) as a binder in an appropriate amount of N-methylpyrrolidone (NMP for short) solvent at a mass ratio of 96: 2: 2 to form a homogeneous positive slurry. Coating a positive current collector aluminum foil with the slurry, and performing drying and cold calendering to obtain a positive electrode plate, where a compacted density of the positive electrode is 3.50 g/cm³.

The preparation methods of the separator, the negative electrode plate, and the lithium-ion battery are the same as those in Embodiments 1 to 62.

The following describes a performance test process and test results of the lithium-ion battery.

### (1) Cycle test:

Charging the battery at a current of 1 C at a temperature of 25 °C until a voltage of 4.25 V, and then charging the battery at a constant voltage of 4.25 V until a current of 0.05 C. Subsequently, discharging the battery at a current of 1 C until a voltage of 2.8 V, and then subjecting the battery to 800 cycles. In each cycle, the battery is charged at 1 C and discharged at 4 C.

### (2) High-temperature storage test:

Charging the battery at a constant current of 0.5 C at a temperature of 25 °C until a voltage of 4.25 V, and then charging the battery at a constant voltage until a current of 0.05 C. Measuring the thickness of the lithium-ion battery, denoted as d₀. Placing the battery into an 85 °C oven to stay for 6 hours, and measuring the thickness at this time, denoted as d. Thickness expansion rate of the lithium-ion battery after 6 hours of high-temperature storage (%) = (d - d₀)/d₀ × 100%. The test stops as soon as the thickness expansion rate exceeds 50%.

**Table 7 Parameters in Embodiments 63 to 79 and Comparative Embodiments 5 to 7**

| Embodiment | First additive | | | | Fifth additive | | | | Sixth additive | Fourth additive | | Performance test | |
|---|---|---|---|---|---|---|---|---|---|---|---|---|---|
| | Compound represented by Formula I-A and compound represented by Formula II-A | | | | Compound represented by Formula VI-A or Formula VI-B | | | | Type and content of compounds represented by Formula VII-A | Type and content of compounds represented by Formula V-A | | Capacity retention rate after 800 cycles completed at 25 °C | Thickness expansion rate of high-temperature storage |
| | Structure 1 formula | wt% | Structural formula | wt% | Structural formula | wt% | Structural formula | wt% | | LPO₂F₂ | LDFOP | | |
| | | | | | | | | | wt% | wt% | wt% | | |
| Embodiment 64 | I-1 | 3.5 | II-1 | 3.5 | | | | | | | | 78.80% | 33.50% |
| Embodiment 65 | I-2 | 3.5 | II-4 | 3.5 | | | | | | | | 80.20% | 31.80% |
| Embodiment 66 | I-3 | 0.5 | II-1 | 3.5 | VI-10 | 2 | | | | | | 82.50% | 29.20% |
| Embodiment 67 | I-1 | 3.5 | II-1 | 3.5 | VI-10 | 2 | VI-14 | 1 | | | | 79.60% | 28.00% |
| Embodiment 68 | I-1 | 3.5 | II-1 | 3.5 | | | | | | 3.1 | | 79.50% | 32.20% |
| Embodiment 69 | I-1 | 3.5 | II-1 | 3.5 | | | | | | 3.3 | | 80.60% | 30.60% |
| Embodiment 70 | I-1 | 3.5 | II-1 | 3.5 | | | | | | 3.5 | | 82.20% | 27.90% |
| Embodiment 71 | I-1 | 0.5 | II-1 | 3.5 | | | | | | 1 | | 82.70% | 24.30% |
| Embodiment 72 | I-1 | 3.5 | II-1 | 3.5 | | | | | | | 3.3 | 79.90% | 31.20% |
| Embodiment 73 | I-1 | 0.5 | II-1 | 0.5 | | | | | FEC (1) | | | 80.00% | 33.20% |
| Embodiment 74 | I-1 | 3.5 | II-1 | 3.5 | | | | | VC (0.3) | | | 79.60% | 32.90% |
| Embodiment 75 | I-1 | 3.5 | II-1 | 3.5 | | | | | FEC (1), VC (0.3) | | | 82.20% | 33.00% |
| Embodiment 76 | I-1 | 3.5 | II-1 | 3.5 | | | | | FEC (1), VC (0.5) | | | 82.80% | 34.30% |
| Embodiment 77 | I-2 | 0.5 | II-1 | 0.5 | VI-10 | 2 | VI-14 | 1 | | 0.5 | | 84.20% | 21.20% |
| Embodiment 78 | I-3 | 0.5 | II-4 | 0.5 | VI-10 | 2 | VI-14 | 1 | | 0.5 | | 85.70% | 21.90% |
| Embodiment 79 | I-2 | 0.3 | II-1 | 0.3 | VI-10 | 2 | VI-14 | 1 | | 0.3 | 0.3 | 85.00% | 21.60% |
| | I-3 | 3.2 | II-4 | 3.2 | | | | | | | | | |
| Embodiment 80 | I-1 | 0.5 | II-1 | 0.5 | VI-10 | 2 | VI-14 | 1 | FEC (1), VC (0.3) | 0.5 | 0.3 | 89.20% | 22.30% |
| Comparative Embodiment 4 | / | / | / | / | / | / | / | / | | / | / | 70.80% | Greater than 50% |
| Comparative Embodiment 5 | / | / | / | / | / | / | / | / | 0.5 | 0.5 | / | 78.00% | 40.50% |
| Comparative Embodiment 6 | / | / | / | / | / | / | / | / | / | / | 0.3 | 76.10% | 43.30% |

As can be seen from Embodiments 64 and 65 and Comparative Embodiments 4 to 6, the cycle performance and the high-temperature storage performance of the lithium-ion battery are improved by adding the first additives (the compound represented by Formula I-A and the compound represented by Formula II-A) into the electrolytic solution in a ternary system.

As can be seen from Embodiments 66 and 67, the cycle performance and the high-temperature storage performance of the lithium-ion battery are improved by adding the compound represented by Formula VI-A and the compound represented by Formula VI-B in addition to the first additives. The compound represented by Formula VI-A and the compound represented by Formula VI-B can protect stability of the cathode electrolyte interface, and can also be reduced on the surface of the negative electrode to suppress the decomposition of the electrolytic solution, thereby further enhancing the stability of the electrolyte interface and improving the cycle performance and high-temperature storage performance.

As can be seen from Embodiments 68 to 72, the added compound represented by Formula V-A further improves the high-temperature storage performance of the lithium-ion battery. The compound represented by Formula V-A, such as lithium difluorophosphate (LiPO₂F₂) and lithium tetrafluorooxalate phosphate (LiTFOP), may serve as a cathode film-forming additive to reduce the contact between the electrolytic solution and the positive electrode and suppress gas production. In addition, as can be seen from Embodiments 68 to 71, the cycle performance of the lithium-ion battery is improved with the increase of the content of the compound represented by Formula V-A.

As can be seen from Embodiments 73 to 76, the cycle performance of the lithium-ion battery is improved by adding the compound represented by Formula VII-A in addition to the first additives. The compound represented by Formula VII-A may serve as an anode film-forming additive to reduce the contact between the electrolytic solution and the negative electrode, suppress consumption of the electrolytic solution, and improve the cycle performance.

As can be seen from Embodiments 66 to 80, in a ternary system, the cycle performance and the high-temperature storage performance are improved by combining the compound represented by Formula I-A and the compound represented by Formula II-A with at least two of: the compound represented by Formula V-A, the compound represented by Formula VI-A or Formula VI-B, or the compound represented by Formula VII-A. When a plurality of compounds are used in combination, the cycle performance and the high-temperature storage performance of the lithium-ion battery can be further enhanced.

The features disclosed above are not intended to limit the implementation scope of this application. Therefore, any equivalent changes made without departing from the subject-matter of the claims of this application still fall within the scope of the claims of this application.

## Claims

1. An electrolytic solution, comprising a compound represented by Formula I-A and a compound represented by Formula II-A: 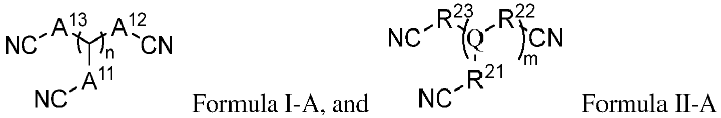
wherein, in Formula I-A, A¹¹, A¹², and A¹³ are each independently selected from Formula (I-A1) and Formula (I-A2): 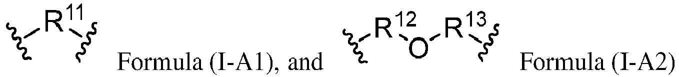
in Formula I-A, n is a positive integer ranging from 1 to 8; when there are a plurality of A¹¹ structures, the plurality of A¹¹ structures are identical or different; and at least two of the A¹¹, A¹², or A¹³ are selected from I-A2;
in Formula II-A, Q is independently selected from Formula (II-A1) and Formula (II-A2): 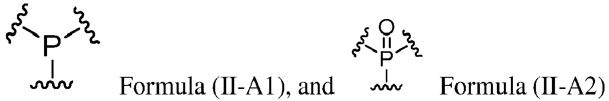
in Formula II-A, m is selected from 1 or 2;
R¹¹, R¹², R¹³, R²¹, R²², and R²³ are each independently selected from a covalent single bond, a substituted or unsubstituted C₁ to C₁₀ alkylidene, a substituted or unsubstituted C₂ to C₁₀ alkenyl, a substituted or unsubstituted C₂ to C₁₀ alkynyl, a substituted or unsubstituted C₆ to C₁₀ aryl, a substituted or unsubstituted C₃ to C₁₀ alicyclic hydrocarbyl, a substituted or unsubstituted C₁ to C₁₀ heterocyclyl, and a substituted or unsubstituted heteroatom-containing functional group, in which a substituent for substitution is halogen;
the heterocyclyl comprises an aliphatic heterocyclyl and an aromatic heterocyclyl; and
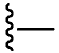 represents a site of bonding with an adjacent atom.

2. The electrolytic solution according to claim 1, wherein
the compound represented by Formula I-A comprises at least one of compounds represented by Formula (1-1) to Formula (1-17): 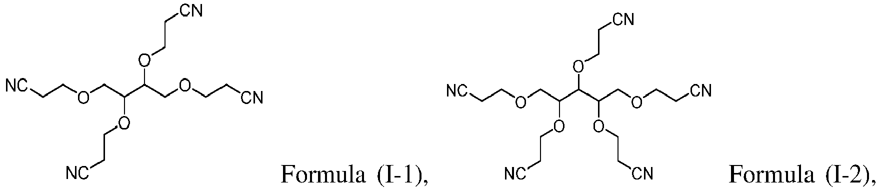 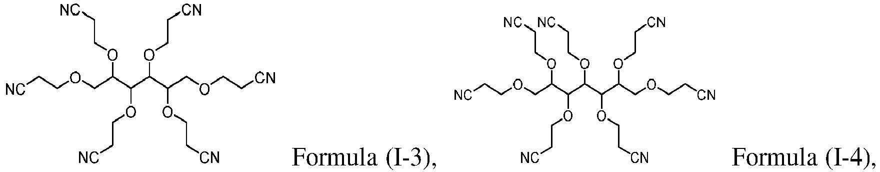 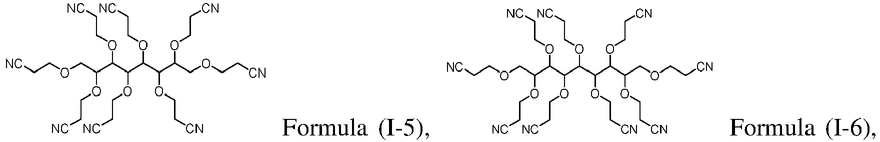 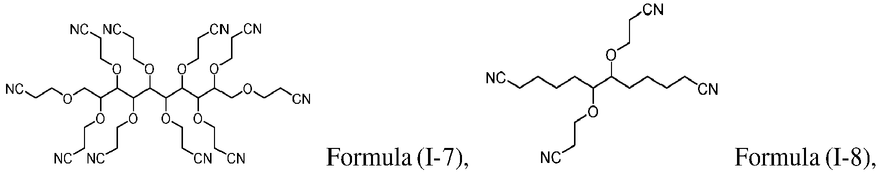 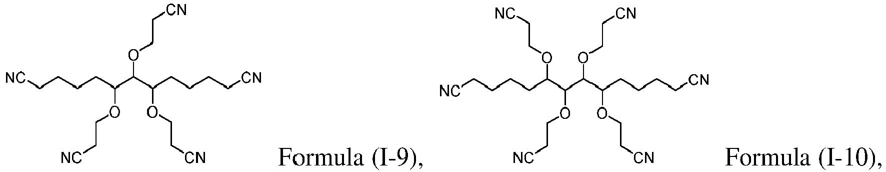 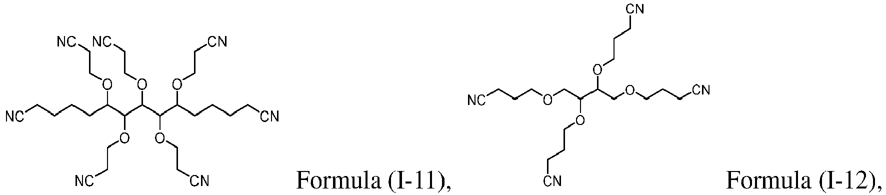 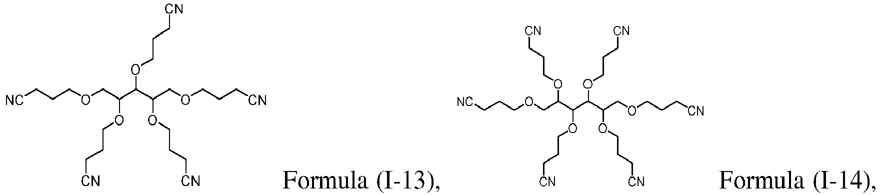 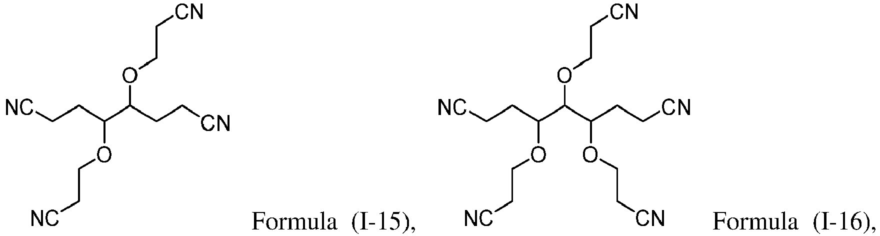
and 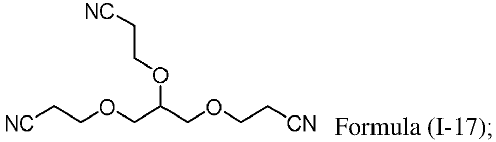 wherein
the compound represented by Formula II-A comprises at least one of compounds represented by Formula (II-1) to Formula (11-21): 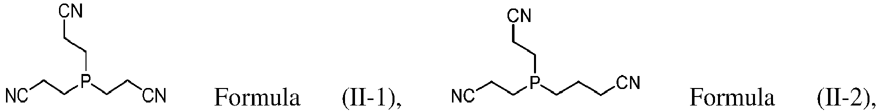 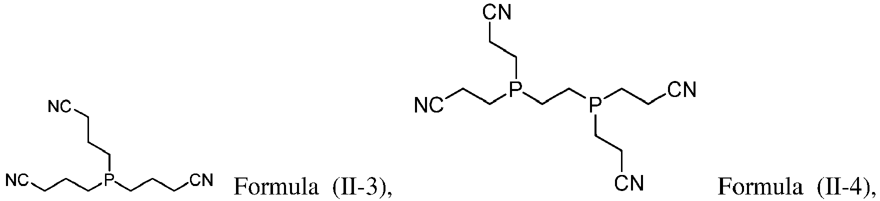 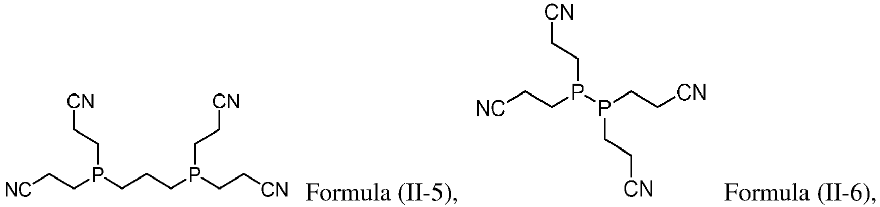 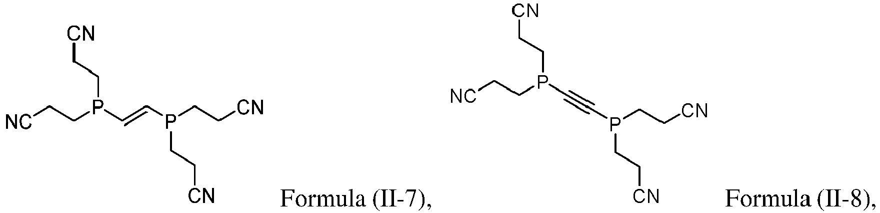 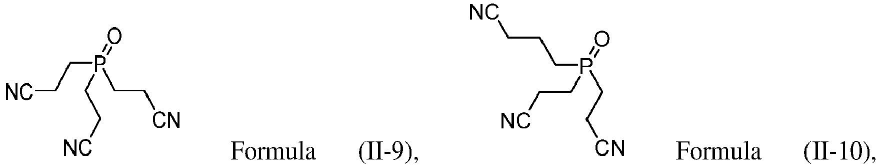 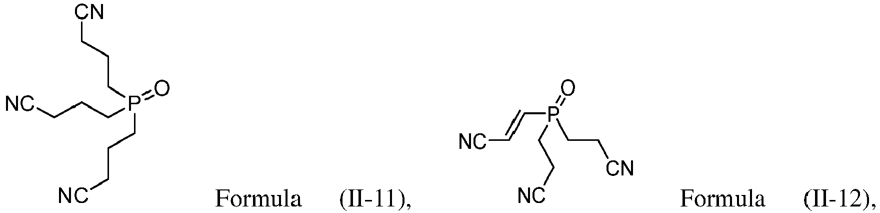 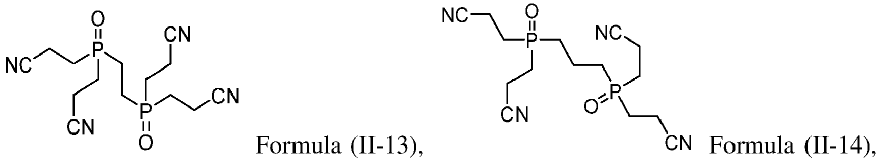 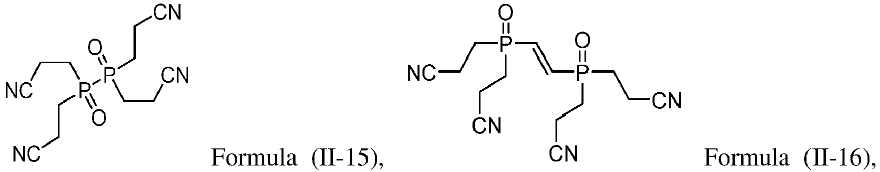 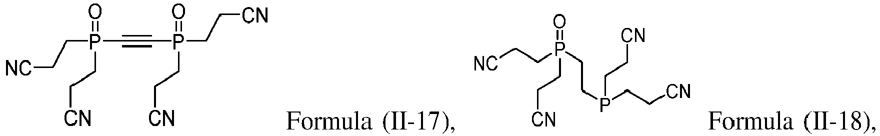 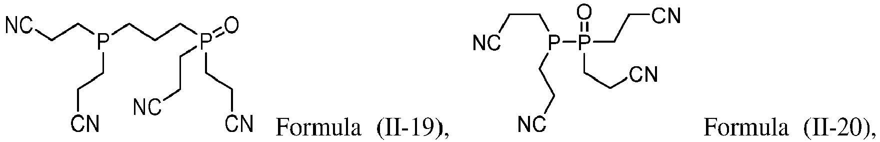
and

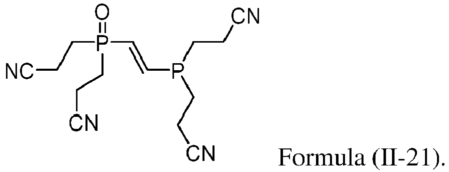

3. The electrolytic solution according to claims 1 to 2, wherein, based on a mass of the electrolytic solution,
a mass percent of the compound represented by Formula I-A is x, and 0.01% ≤ x ≤ 5%; and/or
a mass percent of the compound represented by Formula II-A is y, and 0.01% ≤ y ≤ 5%.

4. The electrolytic solution according to claims 1 to 3, wherein, based on a mass of the electrolytic solution,
an aggregate mass percent of the compound represented by Formula I-A and the compound represented by Formula II-A is 0.1% ≤ x + y ≤ 10%,
x is a mass percent of the compound represented by Formula I-A and
y is a mass percent of the compound represented by Formula II-A.

5. The electrolytic solution according to claims 1 to 4, wherein the electrolytic solution further comprising at least one of a compound represented by Formula III-A, a compound represented by Formula IV-A, a compound represented by Formula V-A, a compound represented by Formula VI-A, a compound represented by Formula VI-B, or a compound represented by Formula VII-A; 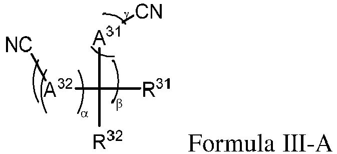
wherein, A³¹ and A³² are each independently selected from halogen, Formula (III-B), and Formula (III-C): 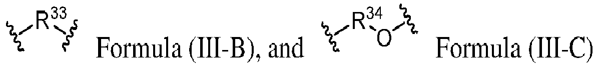
wherein, α and y are each independently selected from 0 or 1, and β is independently selected from 0, 1, or 2;
R³¹ and R³² are each independently selected from hydrogen, halogen, a substituted or unsubstituted C₁ to C₁₀ alkyl, a substituted or unsubstituted C₂ to C₁₀ alkenyl, a substituted or unsubstituted C₂ to C₁₀ alkynyl, a substituted or unsubstituted C₂ to C₁₀ cyclyl, and a substituted or unsubstituted C₂ to C₁₀ heteroatom-containing functional group, in which a substituent for substitution is halogen;
R³³ and R³⁴ are each independently selected from a substituted or unsubstituted C₁ to C₁₀ alkylidene, a substituted or unsubstituted C₂ to C₁₀ alkenyl, a substituted or unsubstituted C₂ to C₁₀ alkynyl, a substituted or unsubstituted C₂ to C₁₀ cyclyl, and a substituted or unsubstituted C₂ to C₁₀ heteroatom-containing functional group, in which a substituent for substitution is halogen;the cyclyl comprises an alicyclyl and a heterocyclyl; 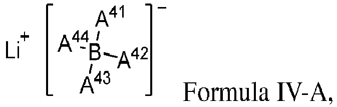
wherein A⁴¹, A⁴², A⁴³, and A⁴⁴ are each independently selected from halogen, Formula (IV-B), Formula (IV-C), and Formula (IV-D): 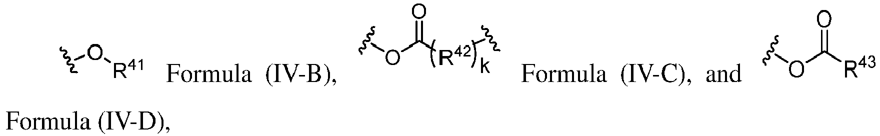
wherein in Formula (IV-C), an O atom is connected to a B atom, and a C atom is connected to a C atom of another substituent, and k is 0 or 1;
R⁴¹ and R⁴³ are each independently selected from a substituted or unsubstituted C₁ to C₆ alkyl and a substituted or unsubstituted C₂ to C₆ alkenyl, in which a substituent for substitution is halogen;
R⁴² is selected from a substituted or unsubstituted C₁ to C₆ alkylidene and a substituted or unsubstituted C₂ to C₆ alkenyl, in which a substituent for substitution is halogen;
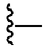 represents a site of bonding with two adjacent atoms; 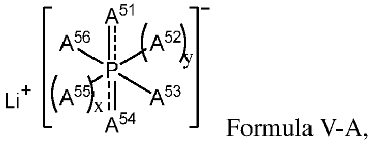
wherein A⁵², A⁵³, A⁵⁵, and A⁵⁶ are each independently selected from halogen, a substituted or unsubstituted C₁ to C₆ alkyl, Formula (V-B), Formula (V-C), and Formula (V-D);
A⁵¹ and A⁵⁴ are each independently selected from an oxygen atom, halogen, a substituted or unsubstituted C₁ to C₆ alkyl, Formula (V-B), Formula (V-C), and Formula (V-D), wherein, when the substituent is halogen, A⁵¹, A⁵², A⁵³, A⁵⁴, A⁵⁵, and A⁵⁶ are not all fluorine: 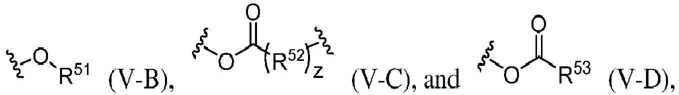
wherein 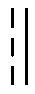 represents a single bond or a double bond, and x, y, and z are each independently represent 0 or 1;
when one 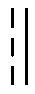 symbol in Formula (V-A) represents a single bond, one of x or y is 1, and the other is 0;
when both 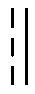 symbols in Formula (V-A) represent a single bond, both x and y are 1;
when both 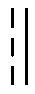 symbols in Formula (V-A) represent a double bond, both x and y are 0;
in Formula (V-C), an O atom is connected to a P atom, and a C atom is connected to a C atom of another substituent, and
R⁵¹ and R⁵³ are each independently selected from a substituted or unsubstituted C₁ to C₆ alkyl and a substituted or unsubstituted C₂ to C₆ alkenyl, in which a substituent for substitution is halogen;
R⁵² is selected from a substituted or unsubstituted C₁ to C₆ alkylidene and a substituted or unsubstituted C₂ to C₆ alkenyl, in which a substituent for substitution is halogen; 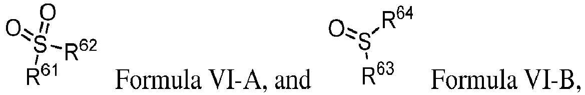
wherein R⁶¹, R⁶², R⁶³, and R⁶⁴ are each independently selected from a substituted or unsubstituted C₁ to C₅ alkyl, a substituted or unsubstituted C₁ to C₅ alkylidene, a substituted or unsubstituted C₂ to C₁₀ alkenyl, a substituted or unsubstituted C₂ to C₁₀ alkynyl, a substituted or unsubstituted C₃ to C₁₀ alicyclyl, a substituted or unsubstituted C₆ to C₁₀ aryl, and a substituted or unsubstituted C₁ to C₆ heterocyclic group, in which a substituent for substitution is one or more of a halogen atom or a heteroatom-containing functional group, R⁶¹ and R⁶² are able to form a cyclic structure, and R⁶³ and R⁶⁴ are able to form a cyclic structure;
an atom in the heteroatom-containing functional group is one or more selected from H, B, C, N, O, F, Si, P, or S;
the heterocyclyl comprises an aliphatic heterocyclyl and an aromatic heterocyclyl; 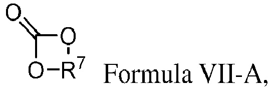
wherein R⁷ is selected from a substituted or unsubstituted C₁ to C₆ alkylidene or a substituted or unsubstituted C₂ to C₆ alkenylene, in which a substituent for substitution is selected from halogen, a C₁ to C₆ alkyl, or a C₂ to C₆ alkenyl.

6. The electrolytic solution according to claims 1 to 5, wherein the electrolytic solution satisfies at least one of the following conditions:
(a) based on a mass of the electrolytic solution, a mass percent of the compound represented by Formula III-A is 0.1% to 5%;
(b) based on a mass of the electrolytic solution, a mass percent of the compound represented by Formula IV-A is 0.01% to 2%;
(c) based on a mass of the electrolytic solution, a mass percent of the compound represented by Formula V-A is 0.01% to 2%;
(d) based on a mass of the electrolytic solution, an aggregate mass percent of the compound represented by Formula VI-A and the compound represented by Formula VI-B is 0.5% to 5%;
(e) based on a mass of the electrolytic solution, a mass percent of the compound represented by Formula VII-A is 0.1% to 10%.

7. The electrolytic solution according to claims 1 to 6, wherein the compound represented by Formula III-A comprises at least one of compounds represented by Formula (III-1) to Formula (III-30):

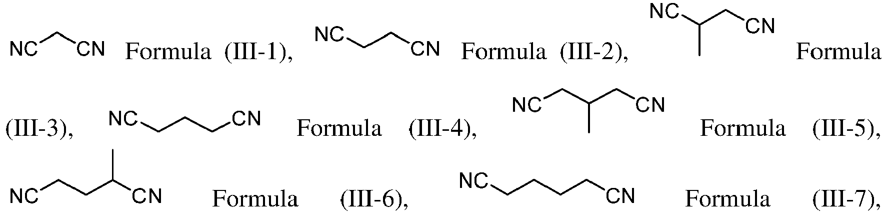

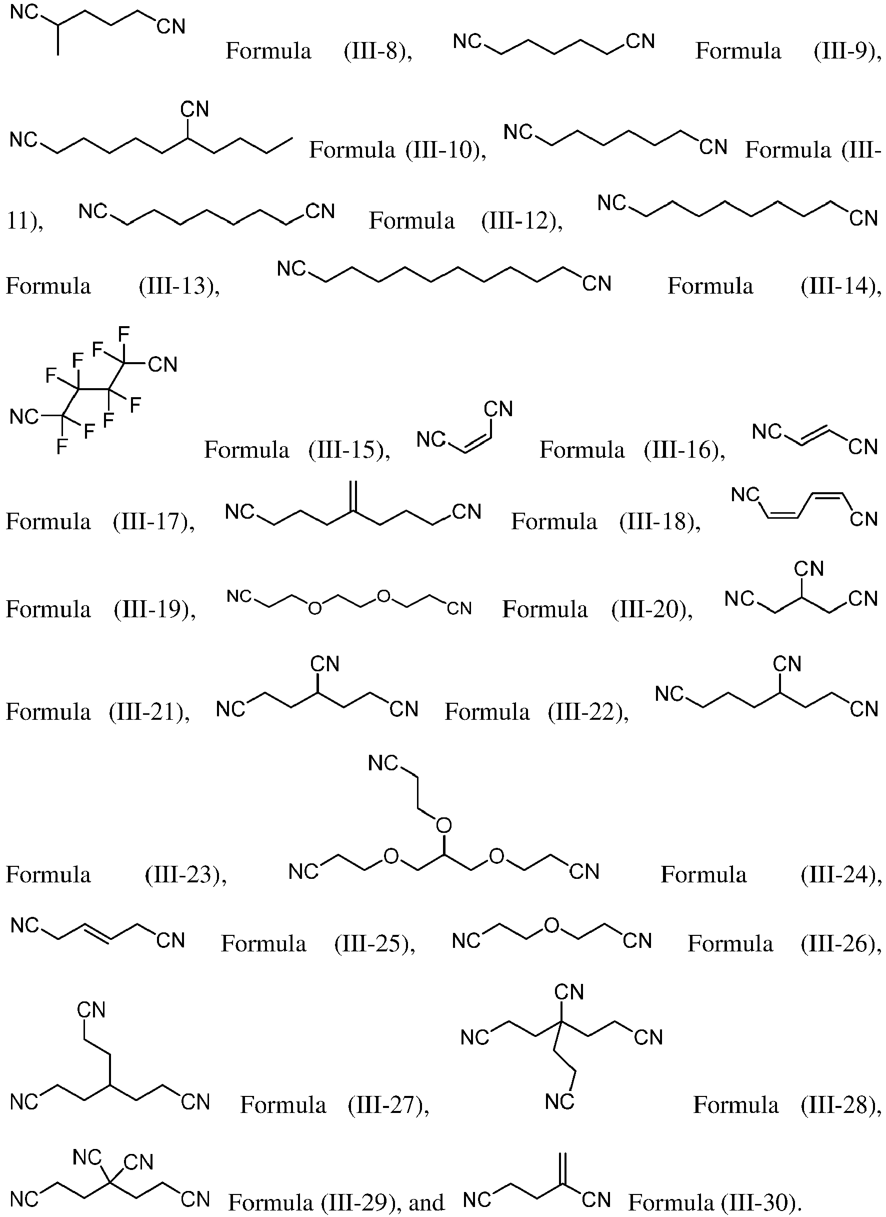

8. The electrolytic solution according to claims 1 to 7, wherein the compound represented by Formula IV-A is at least one of lithium tetrafluoroborate (LiBF₄), lithium bis(oxalato)borate (LiBOB), or lithium difluoro(oxalato)borate (LiDFOB).

9. The electrolytic solution according to claims 1 to 8, wherein the compound represented by Formula V-A is at least one of lithium difluorophosphate (LiPO₂F₂), lithium difluorobisoxalate phosphate (LiDFOP), or lithium tetrafluoro(oxalato)phosphate (LiTFOP).

10. The electrolytic solution according to claims 1 to 9, wherein the compound represented by Formula VI-A and the compound represented by Formula VI-B are each at least one of 1,3-propane sultone (PS), 1,4-butane sultone (BS), methylene methane disulfonate (MMDS), 1,3-propanedisulfonic anhydride, ethylene sulfate, ethylene sulfite, 4-methyl ethylene sulfate, 2,4-butane sultone, 2-methyl-1,3-propane sultone, 1,3-butane sultone, 1-fluoro-1,3-propane sultone, 2-fluoro-1,3-propane sultone, 3-fluoro-1,3-propane sultone, propenyl-1,3-sultone, propylene sulfate, propylene sulfite, or fluoroethylenesulfate.

11. The electrolytic solution according to claims 1 to 10, wherein the compound represented by Formula VII-A is at least one selected from Formula (VII-1) to Formula (VII-12):

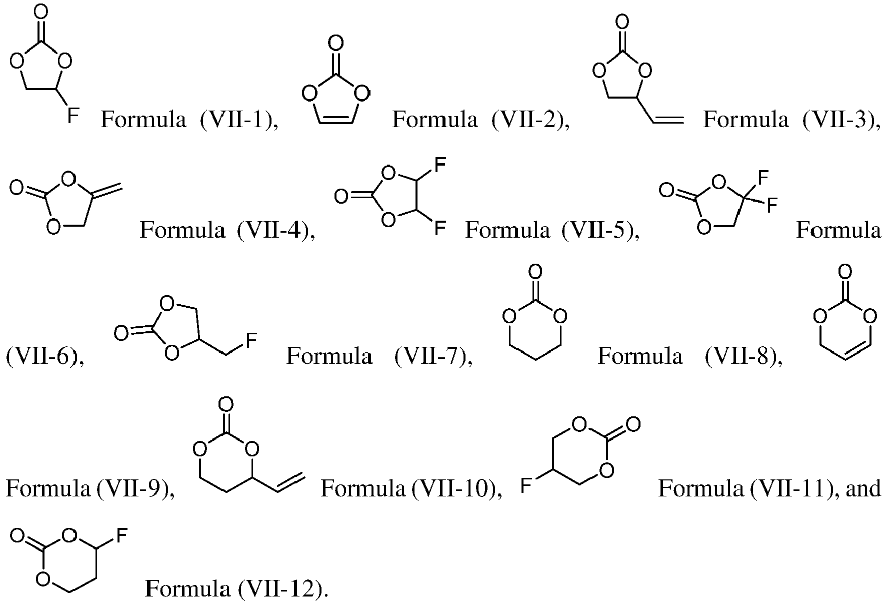

12. The electrolytic solution according to any one of claims 1 to 11, wherein the electrolytic solution satisfies at least one of the following conditions:
(1) based on a mass of the electrolytic solution, a mass percent of the compound represented by Formula I-A is 0.1% to 3%;
(2) based on the mass of the electrolytic solution, a mass percent of the compound represented by Formula II-A is 0.1% to 3%;
(3) based on the mass of the electrolytic solution, a sum of the mass percent of the compound represented by Formula I-A and the compound represented by Formula II-A is 0.5% to 5%;
(4) based on the mass of the electrolytic solution, a mass percent of a compound represented by Formula III-A is 0.5% to 3%;
(5) based on the mass of the electrolytic solution, a mass percent of a compound represented by Formula IV-A is 0.1% to 1.5%;
(6) based on the mass of the electrolytic solution, a mass percent of a compound represented by Formula V-A is 0.1% to 1%;
(7) based on the mass of the electrolytic solution, an aggregate mass percent of a compound represented by Formula VI-A and a compound represented by Formula VI-B is 1.5% to 4.5%; and
(8) based on the mass of the electrolytic solution, a mass percent of a compound represented by Formula VII-A is 0.1% to 5%.

13. An electrochemical device, comprising a positive electrode, a negative electrode, a separator, and the electrolytic solution according to any one of claims 1 to 12.

14. An electronic device, comprising the electrochemical device according to claim 13.
